(19) Europäisches Patentamt
European Patent Office
Office européen des brevets

(11) **EP 4 481 600 A1**

(12) **EUROPÄISCHE PATENTANMELDUNG**

(43) Veröffentlichungstag:
**25.12.2024  Patentblatt 2024/52**

(21) Anmeldenummer: 23180974.0

(22) Anmeldetag: **22.06.2023**

(51) Internationale Patentklassifikation (IPC):
**G06F 21/46** (2013.01)     G06N 3/02 (2006.01)

(52) Gemeinsame Patentklassifikation (CPC):
**G06F 21/46; G06N 3/04;** G06N 3/09

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Zwanzger, Johannes**
**85579 Neubiberg (DE)**

(74) Vertreter: **Siemens Patent Attorneys**
**Postfach 22 16 34**
**80506 München (DE)**

(54) **COMPUTER-IMPLEMENTIERTES VERFAHREN, COMPUTERPROGRAMMPRODUKT UND KOMMUNIKATIONSSYSTEM ZUM IDENTIFIZIEREN VON SICHERHEITSLÜCKEN IN EINER ENTITÄT**

(57)     Es wird ein computer-implementiertes Verfahren zum Identifizieren von Sicherheitslücken in einer Entität in einem Kommunikationssystem mittels einer generierten Passwortliste vorgeschlagen. Das Verfahren weist die folgenden Schritte auf:

a) Empfangen eines trainierten neuronalen Netzes,

b) Erhalten einer oder mehrerer Wahrscheinlichkeitsverteilungen über ein vorbestimmtes Alphabet in Abhängigkeit einer vorbestimmten Anfangszeichenfolge und/oder in Abhängigkeit zumindest einer spezifischen Zeichenfolge aus mehreren spezifischen Zeichenfolgen durch Anwenden des trainierten neuronalen Netzes auf die vorbestimmte Anfangszeichenfolge oder eine der mehreren spezifischen Zeichenfolgen, wobei durch die eine oder mehreren erhaltenen Wahrscheinlichkeitsverteilungen jeweils jedem Zeichen aus dem vorbestimmten Alphabet ein jeweiliger Wahrscheinlichkeitswert zugeordnet wird,

c) Durchführen einer Tiefensuche in einer Datenstruktur mittels Durchsuchen der Datenstruktur in Abhängigkeit der einen oder mehreren erhaltenen Wahrscheinlichkeitsverteilungen und des vorbestimmten Alphabets zum Generieren der Passwortliste, und

d) Identifizieren von Sicherheitslücken in der Entität mittels der generierten Passwortliste.

## FIG 1

S100

S200

S300

S400

EP 4 481 600 A1

**Beschreibung**

Die vorliegende Erfindung betrifft ein computer-implementiertes Verfahren und ein Computerprogrammprodukt zum Identifizieren von Sicherheitslücken in einer Entität. Darüber hinaus betrifft die vorliegende Erfindung ein Kommunikationssystem zum Identifizieren von Sicherheitslücken in einer Entität.

Umfassende Passwortlisten werden sowohl für Angriffe auf als auch zum Schutz von IT-Systemen und Daten benötigt.

Angreifer nutzen solche Listen, um mit sogenannten Brute-Force-Angriffen Zugriff auf Dinge zu erlangen, der ihnen eigentlich verwehrt bleiben sollten. Dies kann beispielsweise direkt durch Eingabe der Passwortkandidaten in ein Anmeldefeld auf einem IT-System geschehen, was allerdings eher die Ausnahme sein dürfte: Zum einen ist der Durchsatz an ausprobierbaren Passwörtern bei einem solchen Vorgehen selbst bei Vollautomatisierung in der Regel sehr niedrig (maximal wenige Passwörter pro Sekunde), zum anderen sperren sich die meisten Systeme nach einer gewissen Zahl falscher Passworteingaben. Deutlich üblicher ist ein Angriff, bei dem mit Hilfe der Liste das Passwort zu dem auf dem System hinterlegten Passworthash rekonstruiert wird: Für alle Wörter der Liste wird der zugehörige Hash berechnet und mit dem hinterlegten Passworthash verglichen. Bei einer Übereinstimmung ist das Passwort gefunden.

Umgekehrt können vorgenerierte Passwortlisten aber auch für legitime Zwecke genutzt werden: Etwa, um Systeme bzw. neu erzeugte Passwörter auf Gefährdung durch die bereits genannten Brute-Force-Angriffe zu testen, aber auch, um versehentlich verloren gegangene Passwörter rekonstruieren zu können.

Im Internet finden sich Passwortlisten mit Millionen von Einträgen [1]. Das klingt nach viel, allerdings wächst die Menge aller Passwörter bis zu einer bestimmten Länge l stark exponentiell in l: Selbst bei Passwörtern, die nur aus den im Deutschen üblichen 26 Buchstaben in Groß- und Kleinschreibung bestehen, steigt die Anzahl mit jedem weiteren Buchstaben um einen Faktor 52. Bereits für l=6 (eine extrem kleine Länge) gibt es dann fast 20 Milliarden Kombinationen - so dass selbst eine Liste mit 20 Millionen Einträgen nur 1 Promille aller möglichen solcher Passworte enthalten kann. Für etwas größere Werte von l ist das erschöpfende Aufzählen aller Kombinationen in praktikabler Zeit nicht mehr möglich. Allerdings zeigen Listen wie die obige, dass von Menschen gewählte Passwörter in der Regel nicht zufällig sind und starke Muster aufweisen (z.B. Übereinstimmung oder zumindest starke Ähnlichkeit mit Worten aus einer Sprache).

Aus dem Stand der Technik sind unterschiedliche Programme zum Testen von Authentifizierungseinrichtungen und Passwörtern bekannt, wie beispielsweise das Programm "John the Ripper" [2] oder das Programm "Hashcat advanced password recovery" [3] .

Zudem sind aus dem Stand der Technik generell neuronale Netze bekannt, siehe [4] - [7]. Überdies ist aus dem Stand der Technik bekannt, dass Passwörter mittels neuronaler Netze generiert werden können, siehe [8] und [9]. Bei [8] werden neuronale Netze zur Generierung und Evaluierung von Passwörtern herangezogen. In [9] werden sogenannte "Generative Adversarial Networks" für die Erzeugung von Passwörtern genutzt.

Allerdings sind die oben diskutierten Regeln zur Passwortgenerierung relativ "mechanischer" Natur, d.h. sie umfassen beispielsweise typische Passwortmodifikationen wie eine Änderung von Groß- und Kleinschreibung an einer bestimmten Zahl von Stellen, Anhängen/Einfügen von Sonderzeichen, Repetition von Teilen des Ausgangspasswortes usw. Dadurch werden aber größtenteils relativ unwahrscheinliche Passwörter erzeugt.

Vor diesem Hintergrund besteht eine Aufgabe der vorliegenden Erfindung darin, das Identifizieren von Sicherheitslücken in einer Entität zu verbessern.

Gemäß einem ersten Aspekt wird ein computer-implementiertes Verfahren zum Identifizieren von Sicherheitslücken in einer Entität in einem Kommunikationssystem mittels einer generierten Passwortliste vorgeschlagen. Das Verfahren weist die folgenden Schritte auf:

a) Empfangen eines trainierten neuronalen Netzes,

b) Erhalten einer oder mehrerer Wahrscheinlichkeitsverteilungen über ein vorbestimmtes Alphabet in Abhängigkeit einer vorbestimmten Anfangszeichenfolge und/oder in Abhängigkeit zumindest einer spezifischen Zeichenfolge aus mehreren spezifischen Zeichenfolgen durch Anwenden des trainierten neuronalen Netzes auf die vorbestimmte Anfangszeichenfolge oder eine der mehreren spezifischen Zeichenfolgen, wobei durch die eine oder mehreren erhaltenen Wahrscheinlichkeitsverteilungen jeweils jedem Zeichen aus dem vorbestimmten Alphabet ein jeweiliger Wahrscheinlichkeitswert zugeordnet wird,

c) Durchführen einer Tiefensuche in einer Datenstruktur, insbesondere in einer Baumstruktur, mittels Durchsuchen der Datenstruktur in Abhängigkeit der einen oder mehreren erhaltenen Wahrscheinlichkeitsverteilungen und des vorbestimmten Alphabets zum Generieren der Passwortliste einer vorbestimmten Listengröße aufweisend eine Anzahl von Passwörtern, und

d) Identifizieren von Sicherheitslücken in der Entität mittels der Anzahl von Passwörtern der generierten Passwortliste.

Gemäß dem ersten Aspekt wird das Identifizieren von Sicherheitslücken in einer Entität dadurch verbessert, dass eine Passwortliste mit möglichst wahrscheinlichen oder plausiblen Passwörtern automatisiert generiert wird, mittels welcher die Trefferwahrscheinlichkeit aufgrund der möglichst wahrscheinlichen Passwörter bei der Identifikation von Sicherheitslücken erhöht wird und damit die Identifikation von Sicherheitslücken erleichtert und beschleunigt wird.

Dies wird durch eine Kombination des Anwendens des trainierten neuronalen Netzes, des Durchsuchens der Baumstruktur anhand der Ausgabe des trainierten neuronalen Netzes sowie der Entscheidung, ob ein jeweiliges Backtracking durchgeführt werden soll oder nicht, erzielt. Hierbei wird durch das oben beschriebene computer-implementierte Verfahren ermöglicht, dass einerseits das trainierte neuronale Netz eingesetzt wird, um auch für größere Passwortlistenlängen noch "organische" (möglichst wahrscheinliche) Passwörter zu generieren, und andererseits eine Tiefensuche nach den gemäß der Ausgaben des trainierten neuronalen Netzes wahrscheinlichsten Passwörtern durchgeführt wird. Innerhalb der Tiefensuche wird dabei auf Basis der vorbestimmten Listengröße und der durch das trainierte neuronale Netz in den Knoten des aktuellen Pfades ermittelten Wahrscheinlichkeitsverteilungen entschieden, ob weiterhin nach Passwörtern unterhalb des aktuellen Knotens gesucht werden sollte oder ob ein Backtracking eingeleitet werden soll. Hierbei wird im Rahmen der Tiefensuche zunächst in die Pfade der Datenstruktur eingetreten, denen auf Basis der von dem trainierten neuronalen Netz vorhergesagten Wahrscheinlichkeitsverteilungen ein höherer Wahrscheinlichkeitswert zugeordnet wurde. Ein Vorteil dieses Vorgehens ist, dass nur jeweils für eine sehr kleine Zahl an Knoten (nämlich die vom Pfad von dem Wurzelknoten bis zum aktuellen Knoten) Information im Speicher gehalten muss.

Zusammenfassend können durch das computer-implementierte Verfahren gemäß dem ersten Aspekt effizient Passwortlisten einer fest vorgegebenen Größe mit sehr plausiblen ("organischen", "wahrscheinlichen") Passwörtern generiert werden, um ein festes Größenlimit, beispielsweise durch einen maximalen Speicherplatz auf einer Festplatte, für eine wiederholt angewandte Passwortliste optimal zu nutzen.

Dies ist vor allem dann von Vorteil, wenn diese Passwortlisten wiederholt zum Einsatz kommen, denn mit jeder zusätzlichen Anwendung der Passwortlisten gewinnt man durch deren Qualität etwas Zeit gegenüber dem schnellen Ausprobieren vergleichsweise unwahrscheinlicher Passwörter (der Aufwand für die Erstellung der Liste muss nur einmal geleistet werden).

Dadurch wird darüber hinaus in vorteilhafter Weise die IT-Sicherheit der Entität und des Kommunikationssystems erhöht.

Das Identifizieren von Sicherheitslücken in einer Entität weist beispielsweise auf:

Identifizieren von schwachen oder unsicheren Zugangsdaten: In einem Firmennetzwerk, beispielsweise einer Automatisierungsanlage, können Zugangsdaten von Mitarbeitern auf Schwachstellen oder unzureichend sichere Passwörter überprüft werden und diese Schwachstellen oder Sicherheitslücken identifiziert werden.

Backdoor Detection: Es kann ein verbesserter Schutz gegen absichtlich hinterlegte/vergessene Passwörter (als Plaintext oder in Form eines Hashes) in Sourcecode, in Firmware und/oder Binaries eines ausgelieferten oder installierten Produktes erreicht werden, z.B. im Rahmen einer Software composition analysis (SCA)-Toolchain.

Passwort Recovery: Durch die generierte verbesserte Passwortliste kann eine höhere Recovery-Quote erreicht werden. Das heißt, dass vergessene oder verlorene Passwörter für einen Computer, eine Anlage oder für Netzwerkressourcen besser identifiziert werden können.

Zudem weist das computer-implementierte Verfahren gegenüber den Programmen [2] und [3] des Standes der Technik, den nachfolgenden Vorteil auf: Die von [2] und [3] unterstützten Regeln ("rules"), mit denen aus vorhandenen Passwörtern neue abgeleitet werden, sind, wie in der Einleitung beschrieben, relativ "mechanischer" Natur. Dadurch werden jedoch unwahrscheinliche Passwörter erzeugt. Dies wird bei einmaliger Anwendung durch die extrem hohe Generierungsgeschwindigkeit der beiden Programme [2] und [3] kompensiert, hilft aber nichts, wenn man an den "wahrscheinlichsten Passwörtern" interessiert ist. Somit sind die beiden Programme [2] und [3], im Gegensatz zu dem computer-implementierten Verfahren gemäß dem ersten Aspekt, nicht in der Lage, wahrscheinliche oder die wahrscheinlichsten Passwörter zu generieren.

Ein computer-implementiertes Verfahren ist insbesondere ein Verfahren, welches einen Computer, ein Computernetz oder ein anderes programmierbares Gerät verwendet, wobei ein oder mehrere Merkmale ganz oder teilweise mit Hilfe eines Computerprogramms realisiert werden.

Die Entität kann ein Computer sein, welcher in einem Firmennetzwerk, beispielsweise einer Automatisierungsanlage, angeordnet ist. Ferner kann die Entität als Softwareprodukt ausgebildet sein, welches beispielsweise vor Inverkehrbringung auf Schwachstellen überprüft werden soll. Weiterhin kann die Entität den Softwareteil eines Hardwareproduktes (z.B. dessen Firmware) darstellen, welches vor Inverkehrbringung auf Schwachstellen überprüft werden soll. Die Entität kann auch ein Server sein, beispielsweise ein Webserver, der auf schwache Zugangscredentials überprüft werden soll.

Das trainierte neuronale Netz weist bei dem Anwenden insbesondere als einen Eingangsparameter die vorbestimmte Anfangszeichenfolge und als einen Ausgabeparameter eine Wahrscheinlichkeitsverteilung über das vorbestimmte Alphabet auf, durch die jedem Zeichen aus dem vorbestimmten Alphabet eine Wahrscheinlichkeit zugeordnet wird.

Das vorbestimmte Alphabet kann ein Zeichen und/oder eine Zeichenkette aufweisen. Das Zeichen kann als ein erstes Zeichen, als ein zweites Zeichen, als ein drittes Zeichen und/oder als ein viertes Zeichen ausgebildet sein. Das Zeichen und/oder die Zeichenkette kann Buchstaben, Ziffern, Sonderzeichen und/oder Steuerzeichen aufweisen. Die Zeichenkette kann auch aus einer Mischung aus Buchstaben, Ziffern, Sonderzeichen und/oder Steuerzeichen ausgebildet sein.

Die vorbestimmte Anfangszeichenfolge ist beispielsweise "ba", "abc" oder ein leerer String "". Die vorbestimmte Anfangszeichenfolge kann auch jeglicher anderer String sein, auf Basis welcher die wahrscheinlichsten Passwörter für diese vorbestimmte Anfangszeichenfolge gesucht werden.

Insbesondere wird in dem Schritt b) jedem Zeichen aus dem vorbestimmten Alphabet ein jeweiliger Wahrscheinlichkeitswert in Abhängigkeit einer jeweiligen Tiefe, beispielsweise einer ersten Tiefe, einer zweiten Tiefe oder einer dritten Tiefe der Datenstruktur, zugeordnet.

Die Tiefe der Datenstruktur kann auch als eine Rekursionstiefe bezeichnet werden. Der Wurzelknoten ist insbesondere in der ersten Tiefe oder der Rekursionstiefe 0 angeordnet. Der erste spezifische Knoten ist insbesondere in der zweiten Tiefe oder der Rekursionstiefe 1 angeordnet. Der zweite spezifische Knoten ist insbesondere in der dritten Tiefe oder der Rekursionstiefe 2 angeordnet.

Die Größe der vorbestimmten Listengröße bzw. die Anzahl der Passwörter wird insbesondere von einem Computer oder einem Benutzer, welcher den Computer bedient, vorgegeben.

Die Tiefensuche (engl. "depth-first search") ist ein Verfahren zum Suchen von Knoten in einem Graphen, beispielsweise der Datenstruktur. Die Tiefensuche verläuft ausgehend von dem Wurzelknoten in der ersten Tiefe nach unten in die zweite, dritte, vierte und/oder weitere Tiefe.

Die Baumstruktur ist insbesondere ein Baum aus Knoten und Kanten und wird als ein Graph dargestellt, wobei die Kanten die Knoten verbinden.

Das Identifizieren gemäß Schritt d) kann auch als ein Erkennen bezeichnet werden. Das Identifizieren weist ebenso ein Überprüfen und/oder Testen der Entität mittels der generierten Passwortliste auf Sicherheitslücken auf. Eine Sicherheitslücke kann ein unsicheres oder schwaches Passwort und/oder Zugangsdaten sein. Ferner kann eine Sicherheitslücke ein absichtlich hinterlegtes oder vergessenes Passwort in einem Sourcecode eines Programms sein.

Gemäß einer Ausführungsform weist die Datenstruktur zumindest einen Wurzelknoten auf, wobei der Wurzelknoten die vorbestimmte Anfangszeichenfolge mit dem Wahrscheinlichkeitswert Eins repräsentiert, wobei das vorbestimmte Alphabet ein Sonderzeichen aufweist, wobei eine erste Wahrscheinlichkeitsverteilung der mehreren Wahrscheinlichkeitsverteilungen durch Anwenden des trainierten neuronalen Netzes auf die vorbestimmte Anfangszeichenfolge erhalten wird, wobei durch die erhaltene erste Wahrscheinlichkeitsverteilung dem Sonderzeichen ein Wahrscheinlichkeitswert zugeordnet wird, wobei der Wurzelknoten in der ersten Tiefe der Datenstruktur angeordnet ist, wobei das Durchsuchen der Datenstruktur in dem Schritt c) aufweist:

Festlegen der vorbestimmten Listengröße, wobei die vorbestimmte Listengröße eine Anzahl M1 von zu generierenden Passwörtern aufweist,
Generieren einer leeren Passwortliste,
Initialisieren eines Passwortzählers mit dem Wert Null,
Festlegen des Wurzelknotens als den aktuellen Knoten,
Anlegen einer ersten Zeichenliste für den Wurzelknoten, die zum Zeitpunkt des Anlegens genau die Zeichen des vorbestimmten Alphabets umfasst, und
Ausführen eines Passwortschemas zum Generieren zumindest eines Passwortes, wobei das Ausführen des Passwortschemas die folgenden Schritte aufweist:

c100) Ermitteln eines ersten Maximierungsergebnisses durch Anwenden einer ersten Maximierungsfunktion auf eine Anzahl N1 von Produkt-Wahrscheinlichkeitswerten zu den in der ersten Zeichenliste verbleibenden Zeichen, wobei die Anzahl N1 der Anzahl der in der ersten Zeichenliste verbleibenden Zeichen entspricht, wobei der dem Sonderzeichen zugeordnete Produkt-Wahrscheinlichkeitswert dem vom trainierten neuronalen Netz ermittelten Wahrscheinlichkeitswert multipliziert mit Eins entspricht, und jeder einem anderen Zeichen als dem Sonderzeichen aus der ersten Zeichenliste zugeordnete Produkt-Wahrscheinlichkeitswert durch Multiplikation des für dieses Zeichen erhaltenen Wahrscheinlichkeitswertes aus der ersten Wahrscheinlichkeitsverteilung mit einem vorbestimmten Wahrscheinlichkeitswert erhalten wird, wobei als das erste Maximierungsergebnis derjenige Wahrscheinlichkeitswert aus der Anzahl N1 von Produkt-Wahrscheinlichkeitswerten ermittelt wird, welcher den höchsten Wert aufweist,
c110) Bestimmen eines ersten Variablenwertes durch Anwenden einer ersten Backtracking-Entscheidungs-Funktion auf einen ermittelten ersten Passwortwahrscheinlichkeitswert, wobei der erste Passwortwahrscheinlichkeitswert zumindest in Abhängigkeit des ersten Maximierungsergebnisses ermittelt wird, wobei wenn zumindest der erste Variablenwert wahr ist und
c111) wenn als das erste Maximierungsergebnis der zu dem Sonderzeichen zugeordnete Produkt-Wahrscheinlichkeitswert ermittelt wird,

Anhängen des Sonderzeichens an die vorbestimmte Anfangszeichenfolge zum Erhalten der vorbestimmten Anfangszeichenfolge als ein erstes oder ein weiteres Passwort,

Entfernen des Sonderzeichens aus der ersten Zeichenliste, und

Hinzufügen des ersten oder des weiteren Passwortes zu der generierten Passwortliste und Erhöhen des Wertes des Passwortzählers um Eins,

wobei wenn der Wert des Passwortzählers gleich der Anzahl M1 ist,

Beenden des Durchführens der Tiefensuche und Fortfahren mit Schritt d), oder

wenn als das erste Maximierungsergebnis ein erster bestimmter Wahrscheinlichkeitswert aus den Produkt-Wahrscheinlichkeitswerten, welcher nicht dem zu dem Sonderzeichen zugeordneten Produkt-Wahrscheinlichkeitswert entspricht, ermittelt wird,

c112) Anhängen eines ersten Zeichens, welches dem ersten bestimmten Wahrscheinlichkeitswert zugeordnet ist, an die vorbestimmte Anfangszeichenfolge zum Ermitteln einer ersten spezifischen Zeichenfolge, welche einem ersten spezifischen Knoten zugeordnet ist, welcher durch Anhängen des ersten Zeichens an die vorbestimmte Anfangszeichenfolge ermittelt wird,

c113) Entfernen des ersten Zeichens aus der ersten Zeichenliste,

c114) Anlegen einer zweiten Zeichenliste für den ersten spezifischen Knoten, die zum Zeitpunkt des Anlegens genau die Zeichen des vorbestimmten Alphabets umfasst,

c115) Festlegen des Wahrscheinlichkeitswertes für den ersten spezifischen Knoten durch Multiplikation des Wahrscheinlichkeitswertes des Wurzelknotens mit dem ersten Maximierungsergebnis,

c116) Festlegen des Wurzelknotens als einen ersten Rücksprungpunkt für den ersten spezifischen Knoten zum Durchführen des zweiten Backtrackings,

c117) Festlegen des ersten spezifischen Knotens als den aktuellen Knoten, und

c118) Fortsetzen des Durchsuchens der Datenstruktur in dem Schritt c) ab dem ersten spezifischen Knoten, oder

c119) wenn der erste Variablenwert falsch ist, Durchführen eines ersten Backtrackings, wobei bei dem Durchführen des ersten Backtrackings das Durchführen der Tiefensuche abgebrochen wird.

Das trainierte neuronale Netz wird in jedem Knoten der Datenstruktur, also beispielsweise dem Wurzelknoten oder dem ersten spezifischen Knoten, implementiert, um eine jeweilige Wahrscheinlichkeitsverteilung für den jeweiligen Knoten zu erhalten, beispielsweise die erste Wahrscheinlichkeitsverteilung für den Wurzelknoten oder die zweite Wahrscheinlichkeitsverteilung für den ersten spezifischen Knoten. Auf Basis dieser jeweiligen Wahrscheinlichkeitsverteilung kann dann eine Backtracking-Entscheidung anhand der jeweiligen Backtracking-Entscheidungs-Funktion bestimmt werden.

Gemäß dieser Ausführungsform wird die Tiefensuche gemäß Schritt c) derart durchgeführt, dass die Anzahl der zu generierenden Passwörter durch Durchlaufen der Baumstruktur erzeugt werden. Hierbei repräsentieren die Knoten jeweils die vorbestimmte Anfangszeichenfolge oder eine der mehreren spezifischen Zeichenfolgen, die insbesondere alle darunterliegenden Knoten als Anfangsstring besitzen und die jeweiligen Kanten entsprechen einem an die vorbestimmte Anfangszeichenfolge oder eine der mehreren spezifischen Zeichenfolgen anzuhängenden Zeichen aus dem vorbestimmten Alphabet.

Durch das Bestimmen des Variablenwertes gemäß Schritt c110), insbesondere des ersten Variablenwertes, durch Anwenden der ersten Backtracking-Entscheidungs-Funktion wird entschieden, wann die Pfade unterhalb des aktuellen Knotens zu der vorbestimmten Anfangszeichenfolge oder einer der spezifischen Zeichenfolgen durch die Tiefensuche so weit abgesucht wurden, dass es aussichtsreicher ist, ein Backtracking, beispielsweise ein zweites Backtracking, vorzunehmen, um weitere Passwörter zu finden.

Diese Entscheidung wird im Rahmen des Anwendens einer zweiten oder dritten Backtracking-Entscheidungs-Funktion in einer Ausführungsform später genauer erläutert.

Ein Durchführen eines Backtrackings weist insbesondere auf, dass ein anderes Zeichen in einem der Vorgängerknoten in Bezug auf den aktuellen Knoten ausgewählt wird und zu diesem Vorgängerknoten zurückgesprungen wird. Das "Zurückspringen" bedeutet vorzugsweise, dass in einen Knoten oberhalb des aktuellen Knotens zurückgesprungen wird. Sofern im Rahmen des Anwendens einer Backtracking-Entscheidungs-Funktion, beispielsweise der dritten Backtracking-Entscheidungs-Funktion, entschieden wird, dass eine Tiefe beim Zurückspringen übersprungen werden soll, wird zuerst in eine Tiefe oberhalb des aktuellen Knotens in Richtung des Wurzelknotens ein Backtracking durchgeführt. Anschließend wird vorzugsweise in dieser Tiefe erneut eine Backtracking-Entscheidungs-Funktion ausgeführt, um dann möglicherweise erneut eine weitere Tiefe nach oben in Richtung des Wurzelknotens zurückzuspringen. Insbesondere kann mit einem Backtracking keine Tiefe in der Baumstruktur übersprungen werden, um zu einer höheren Tiefe in Richtung des Wurzelknotens zu gelangen.

Die Tiefensuche wird insbesondere bei dem Durchführen des ersten Backtrackings abgebrochen, da hierbei anhand des ersten Variablenwertes ermittelt wurde, dass kein Passwort gefunden werden kann und deshalb die Tiefensuche abgebrochen wird.

Der Wurzelknoten stellt den Startknoten dar.

Das Sonderzeichen ist beispielsweise ein Dollar-Zeichen $. Das Sonderzeichen ist insbesondere ein Schriftzeichen, welches weder ein Buchstabe noch eine Ziffer ist. Zu den Sonderzeichen können auch Interpunktionszeichen und/oder wissenschaftlich-technische Zeichen gehören.

Der aktuelle Knoten ist immer derjenige Knoten, in welchem sich die Tiefensuche gerade in der Datenstruktur befindet.

Das Anwenden der ersten Maximierungsfunktion weist insbesondere ein Vergleichen der Wahrscheinlichkeitswerte der Anzahl N1 von Produkt-Wahrscheinlichkeitswerten zu den in der ersten Zeichenliste verbleibenden Zeichen mit dem zu dem Sonderzeichen zugeordneten Produkt-Wahrscheinlichkeitswert auf. Insbesondere falls der zu dem Sonderzeichen zugeordnete Produkt-Wahrscheinlichkeitswert größer (zahlenmäßig größer) als zumindest einer der Produkt-Wahrscheinlichkeitswerte der Anzahl N1 ist, wird durch das Anwenden der ersten Maximierungsfunktion als das erste Maximierungsergebnis der zu dem Sonderzeichen zugeordnete Produkt-Wahrscheinlichkeitswert ermittelt. Wenn andererseits einer der Produkt-Wahrscheinlichkeitswerte der Anzahl N1 größer als der zu dem Sonderzeichen zugeordnete Produkt-Wahrscheinlichkeitswert ist, wird durch das Anwenden der ersten Maximierungsfunktion als das erste Maximierungsergebnis der eine der Produkt-Wahrscheinlichkeitswerte der Anzahl N1 ermittelt. Die erste Maximierungsfunktion ist vorzugsweise eine mathematische Funktion. Die Ausführungen für die erste Maximierungsfunktion geltenden analog auch für die zweite Maximierungsfunktion und die Anzahl N2 von Produkt-Wahrscheinlich-keitswerten und/oder für die dritte Maximierungsfunktion und die Anzahl N3 von Produkt-Wahrscheinlichkeitswerten.

Sobald ein Zeichen aus der ersten, zweiten oder dritten Zeichenliste entfernt wird, werden die restlichen in der jeweiligen Zeichenliste befindlichen Zeichen verbleibende Zeichen genannt.

Ein jeweiliger Variablenwert, beispielsweise der erste, zweite oder dritte Variablenwert, kann den Rückgabewert wahr oder falsch aufweisen. Insbesondere ist der Rückgabewert für wahr 1 und der Rückgabewert für falsch 0.

Sobald vorzugsweise das Sonderzeichen an eine Zeichenfolge, beispielsweise die vorbestimmte Anfangszeichenfolge, angehängt wird, wird die jeweilige Zeichenfolge als ein Passwort in die generierte Passwortliste aufgenommen. Wenn zuvor noch kein Passwort gefunden wurde, ist dieses aufgenommene Passwort nun das erste Passwort. Sofern jedoch bereits ein Passwort gefunden wurde, ist dieses aufgenommene Passwort ein weiteres Passwort.

Wenn der Wert des Passwortzählers gleich der Anzahl M1 ist, bedeutet dies, dass ausreichend viele Passwörter entsprechend der vorbestimmten Listengröße gefunden wurden.

Sobald das zweite Backtracking durchgeführt wird, wird von dem ersten spezifischen Knoten in den Wurzelknoten, welcher als erster Rücksprungpunkt definiert ist, zurückgesprungen. Insbesondere kann das zweite Backtracking auch zeitlich nach dem dritten Backtracking, einem weiteren Backtracking, oder kurz vor Ende der Tiefensuche durchgeführt werden. Die Bezeichnung "erstes", "zweites" oder "drittes" Backtracking stellt keine zeitliche Reihenfolge dar, nach welcher die jeweiligen Backtrackings in der Tiefensuche durchgeführt werden.

Der vorbestimmte Wahrscheinlichkeitswert kann festgelegt sein und tiefenunabhängig ausgebildet sein.

Gemäß einer weiteren Ausführungsform ist der vorbestimmte Wahrscheinlichkeitswert von der Tiefe der Datenstruktur, insbesondere von der ersten Tiefe, der zweiten Tiefe oder der dritten Tiefe, abhängig.

Gemäß einer weiteren Ausführungsform wird der erste Passwortwahrscheinlichkeitswert durch Multiplizieren des Wahrscheinlichkeitswertes für den Wurzelknoten mit dem ersten Maximierungsergebnis ermittelt.

Gemäß einer weiteren Ausführungsform wird der erste Variablenwert durch Anwenden der ersten Backtracking-Entscheidungs-Funktion auf den ermittelten ersten Passwortwahrscheinlichkeitswert, auf einen Zustand des Wurzelknotens und auf eine Anzahl von noch für die Passwortliste zu generierenden Passwörtern bestimmt.

Der Zustand des Wurzelknotens kann als durch die von dem trainierten neuronalen Netz erhaltene erste Wahrscheinlichkeitsverteilung ($v(z, -)$) für den zu dem Wurzelknoten gehörenden Anfangsstring, in diesem Fall die vorbestimmte Anfangszeichenfolge ($z$), sowie als Stacklistenelement ($C[i]$) der in dem Wurzelknoten bereits durchprobierten Zeichen aus dem vorbestimmten Alphabet, die jeweils einer von dem Wurzelknoten ausgehenden Kante der Datenstruktur entsprechen, beschrieben werden.

Insbesondere wird die erste Backtracking-Entscheidungs-Funktion analog zu der Ermittlung der zweiten Backtracking-Entscheidungs-Funktion und/oder der dritten Backtracking-Entscheidungs-Funktion ermittelt.

Gemäß einer weiteren Ausführungsform weist das Fortsetzen des Durchsuchens der Datenstruktur in dem Schritt c) ab dem ersten spezifischen Knoten auf:

c200) Erhalten einer zweiten Wahrscheinlichkeitsverteilung der mehreren Wahrscheinlichkeitsverteilungen durch Anwenden des trainierten neuronalen Netzes auf die erste spezifische Zeichenfolge,
Ermitteln eines zweiten Maximierungsergebnisses durch Anwenden einer zweiten Maximierungsfunktion auf eine Anzahl N2 von Produkt-Wahrscheinlichkeitswerten zu den in der zweiten Zeichenliste verbleibenden Zeichen, wobei die Anzahl N2 der Anzahl der in der zweiten Zeichenliste verbleibenden Zeichen entspricht, wobei der dem Sonderzeichen zugeordnete Produkt-Wahrscheinlichkeitswert dem in der zweiten Wahrscheinlichkeitsverteilung ermittelten Wahrscheinlichkeitswert multipliziert mit Eins entspricht, und jeder einem anderen Zeichen als dem Sonderzeichen aus der zweiten Zeichenliste zugeordnete Produkt-Wahrscheinlichkeitswert durch Multiplikation des für dieses Zeichen erhaltenen Wahrscheinlichkeitswertes aus der zweiten Wahrscheinlichkeitsverteilung mit dem vorbestimmten Wahrscheinlichkeitswert erhalten wird, wobei als das zweite Maximierungsergebnis derjenige Wahrscheinlichkeitswert aus der Anzahl N2 von Produkt-Wahrscheinlichkeitswerten ermittelt wird, welcher den höchsten Wert aufweist,

c210) Bestimmen eines zweiten Variablenwertes durch Anwenden einer zweiten Backtracking-Entscheidungs-Funktion auf einen ermittelten zweiten Passwortwahrscheinlichkeitswert, wobei der zweite Passwortwahrscheinlichkeitswert zumindest in Abhängigkeit des zweiten Maximierungsergebnisses ermittelt wird, wobei wenn zumindest der zweite Variablenwert wahr ist und

c211) wenn als das zweite Maximierungsergebnis der zu dem Sonderzeichen zugeordnete Produkt-Wahrscheinlichkeitswert ermittelt wird,

> Anhängen des Sonderzeichens an die erste spezifische Zeichenfolge zum Erhalten der ersten spezifischen Zeichenfolge als ein erstes oder ein weiteres Passwort,
> Entfernen des Sonderzeichens aus der zweiten Zeichenliste, und
> Hinzufügen des ersten oder des weiteren Passwortes zu der generierten Passwortliste und Erhöhen des Wertes des Passwortzählers um Eins,
> wobei wenn der Wert des Passwortzählers gleich der Anzahl M1 ist,
> Beenden des Durchführens der Tiefensuche und Fortfahren mit Schritt d), oder

wenn als das zweite Maximierungsergebnis ein zweiter bestimmter Wahrscheinlichkeitswert aus den Produkt-Wahrscheinlichkeitswerten, welcher nicht dem zu dem Sonderzeichen zugeordneten Produkt-Wahrscheinlichkeitswert entspricht, ermittelt wird,

c212) Anhängen eines zweiten Zeichens, welches dem zweiten bestimmten Wahrscheinlichkeitswert zugeordnet ist, an die erste spezifische Zeichenfolge zum Ermitteln einer zweiten spezifischen Zeichenfolge, welche einem zweiten spezifischen Knoten zugeordnet ist, welcher durch Anhängen des zweiten Zeichens an die erste spezifische Zeichenfolge ermittelt wird,

c213) Entfernen des zweiten Zeichens aus der zweiten Zeichenliste,

c214) Anlegen einer dritten Zeichenliste für den zweiten spezifischen Knoten, die zum Zeitpunkt des Anlegens genau die Zeichen des vorbestimmten Alphabets umfasst,

c215) Festlegen des Wahrscheinlichkeitswertes für den zweiten spezifischen Knoten durch Multiplikation des Wahrscheinlichkeitswertes für den ersten spezifischen Knoten mit dem zweiten Maximierungsergebnis,

c216) Festlegen des ersten spezifischen Knotens als einen zweiten Rücksprungpunkt für den zweiten spezifischen Knoten zum Durchführen eines dritten Backtrackings,

c217) Festlegen des zweiten spezifischen Knotens als den aktuellen Knoten, und

c218) Fortsetzen des Durchsuchens der Datenstruktur in dem Schritt c) ab dem zweiten spezifischen Knoten, oder

c219) wenn der zweite Variablenwert falsch ist,

Durchführen eines zweiten Backtrackings, wobei das Durchführen des zweiten Backtrackings aufweist:

> Fortsetzen des Durchsuchens der Datenstruktur in dem Schritt c) ab dem ersten Rücksprungpunkt, aufweisend:
> Wiederholtes Ausführen der Schritte c100) - c118).

Die Datenstruktur ist bis zu dieser Ausführungsform wie folgt aufgebaut: Der Wurzelknoten ist der Startknoten in der ersten Tiefe, welcher an der obersten Stelle der Datenstruktur, die sich nur nach unten fortsetzt, angeordnet ist. Ein erster Pfad führt von dem Wurzelknoten über eine erste Kante zu dem ersten spezifischen Knoten in der zweiten Tiefe. Die erste Kante ist dem ersten Zeichen zugeordnet. Somit wird durch Anhängen des ersten Zeichens der ersten Kante an die vorbestimmte Anfangszeichenfolge der erste spezifische Knoten ermittelt. Zudem führt ein zweiter Pfad von dem ersten spezifischen Knoten über eine zweite Kante zu dem zweiten spezifischen Knoten in der dritten Tiefe. Die zweite Kante ist dem zweiten Zeichen zugeordnet. Somit wird durch Anhängen des zweiten Zeichens der zweiten Kante an die erste spezifische Zeichenfolge, welche dem ersten spezifischen Knoten zugeordnet ist, der zweite spezifische Knoten ermittelt.

Insbesondere weist das wiederholte Ausführen der Schritte c100) - c118) ein Ausführen dieser Schritte mit einer reduzierten ersten Zeichenliste auf, in welcher das erste Zeichen nicht mehr Teil der ersten Zeichenliste ist. Mit anderen Worten werden die Schritte c100) - c118) bei dem wiederholten Ausführen mit den in der ersten Zeichenliste verbleibenden Zeichen durchgeführt.

Gemäß einer weiteren Ausführungsform wird der zweite Passwortwahrscheinlichkeitswert durch Multiplizieren des Wahrscheinlichkeitswertes des ersten spezifischen Knotens mit dem zweiten Maximierungsergebnis ermittelt.

Gemäß einer weiteren Ausführungsform wird der zweite Variablenwert durch Anwenden der zweiten Backtracking-Entscheidungs-Funktion auf den ermittelten zweiten Passwortwahrscheinlichkeitswert, auf einen jeweiligen Zustand aller jeweiligen Knoten von dem Wurzelknoten bis zu dem ersten spezifischen Knoten und auf die Anzahl von noch für die Passwortliste zu generierenden Passwörtern bestimmt.

Ein jeweiliger Zustand eines jeweiligen Knotens kann als durch die von dem trainierten neuronalen Netz erhaltene Wahrscheinlichkeitsverteilung für die zu dem jeweiligen Knoten gehörende Zeichenfolge sowie als jeweiliges Stacklistenelement der in dem jeweiligen Knoten bereits durchprobierten Zeichen aus dem vorbestimmten Alphabet beschrieben werden.

Gemäß einer weiteren Ausführungsform weist das Fortsetzen des Durchsuchens der Datenstruktur in dem Schritt c) ab dem zweiten spezifischen Knoten auf:

c300) Erhalten einer dritten Wahrscheinlichkeitsverteilung der mehreren Wahrscheinlichkeitsverteilungen durch Anwenden des trainierten neuronalen Netzes auf die zweite spezifische Zeichenfolge,
Ermitteln eines dritten Maximierungsergebnisses durch Anwenden einer dritten Maximierungsfunktion auf eine Anzahl N3 von Produkt-Wahrscheinlichkeitswerten zu den in der dritten Zeichenliste verbleibenden Zeichen, wobei die Anzahl N3 der Anzahl der in der dritten Zeichenliste verbleibenden Zeichen entspricht, wobei der dem Sonderzeichen zugeordnete Produkt-Wahrscheinlichkeitswert dem in der dritten Wahrscheinlichkeitsverteilung ermittelten Wahrscheinlichkeitswert multipliziert mit Eins entspricht, und jeder einem anderen Zeichen als dem Sonderzeichen aus der dritten Zeichenliste zugeordnete Produkt-Wahrscheinlichkeitswert durch Multiplikation des für dieses Zeichen erhaltenen Wahrscheinlichkeitswertes aus der dritten Wahrscheinlichkeitsverteilung mit dem vorbestimmten Wahrscheinlichkeitswert erhalten wird, wobei als das dritte Maximierungsergebnis derjenige Wahrscheinlichkeitswert aus der Anzahl N3 von Produkt-Wahrscheinlichkeitswerten ermittelt wird, welcher den höchsten Wert aufweist,
c310) Bestimmen eines dritten Variablenwertes durch Anwenden einer dritten Backtracking-Entscheidungs-Funktion auf einen ermittelten dritten Passwortwahrscheinlichkeitswert, wobei der dritte Passwortwahrscheinlichkeitswert zumindest in Abhängigkeit des dritten Maximierungsergebnisses (Max3) ermittelt wird, wobei
wenn zumindest der dritte Variablenwert wahr ist und
c311) wenn als das dritte Maximierungsergebnis der zu dem Sonderzeichen zugeordnete Produkt-Wahrscheinlichkeitswert ermittelt wird,

Anhängen des Sonderzeichens an die zweite spezifische Zeichenfolge zum Erhalten der zweiten spezifischen Zeichenfolge als ein erstes oder ein weiteres Passwort,
Entfernen des Sonderzeichens aus der dritten Zeichenliste, und
Hinzufügen des ersten oder des weiteren Passwortes zu der generierten Passwortliste und Erhöhen des Wertes des Passwortzählers um Eins,
wobei wenn der Wert des Passwortzählers gleich der Anzahl M1 ist,
Beenden des Durchführens der Tiefensuche und Fortfahren mit Schritt d), oder

wenn als das dritte Maximierungsergebnis ein dritter bestimmter Wahrscheinlichkeitswert aus den Produkt-Wahrscheinlichkeitswerten, welcher nicht dem zu dem Sonderzeichen zugeordneten Produkt-Wahrscheinlichkeitswert entspricht, ermittelt wird,
c312) Anhängen eines dritten Zeichens, welches dem dritten bestimmten Wahrscheinlichkeitswert zugeordnet ist, an die zweite spezifische Zeichenfolge zum Ermitteln einer dritten spezifischen Zeichenfolge, welche einem dritten spezifischen Knoten zugeordnet ist, welcher durch Anhängen des dritten Zeichens an die zweite spezifische Zeichenfolge ermittelt wird,
c313) Entfernen des dritten Zeichens aus der dritten Zeichenliste,
c314) Anlegen einer vierten Zeichenliste für den dritten spezifischen Knoten, die zum Zeitpunkt des Anlegens genau die Zeichen des vorbestimmten Alphabets umfasst,
c315) Festlegen des Wahrscheinlichkeitswertes für den dritten spezifischen Knoten durch Multiplikation des Wahrscheinlichkeitswertes für den zweiten spezifischen Knoten mit dem dritten Maximierungsergebnis,
c316) Festlegen des zweiten spezifischen Knotens als einen dritten Rücksprungpunkt für den dritten spezifischen Knoten zum Durchführen eines vierten Backtrackings,
c317) Festlegen des dritten spezifischen Knotens als den aktuellen Knoten, und
c318) Fortsetzen des Durchsuchens der Datenstruktur in dem Schritt c) ab dem dritten spezifischen Knoten, oder
c319) wenn der dritte Variablenwert falsch ist,

Durchführen des dritten Backtrackings, aufweisend:

Fortsetzen des Durchsuchens der Datenstruktur in dem Schritt c) ab dem für den zweiten spezifischen Knoten festgelegten zweiten Rücksprungpunkt, aufweisend:

Wiederholtes Ausführen zumindest der Schritte c200 - c218.

Die Datenstruktur ist in dieser Ausführungsform ferner zusätzlich wie folgt aufgebaut: Ein dritter Pfad führt von dem zweiten spezifischen Knoten über eine dritte Kante zu dem dritten spezifischen Knoten in einer vierten Tiefe. Die dritte Kante ist dem dritten Zeichen zugeordnet. Somit wird durch Anhängen des dritten Zeichens der dritten Kante an die zweite spezifische Zeichenfolge, welche dem zweiten spezifischen Knoten zugeordnet ist, der dritte spezifische Knoten ermittelt.

Insbesondere weist das wiederholte Ausführen der Schritte c200) - c218) ein Ausführen dieser Schritte mit einer reduzierten zweiten Zeichenliste auf, in welcher das zweite Zeichen nicht mehr Teil der zweiten Zeichenliste ist. Mit anderen Worten werden die Schritte c200) - c218) bei dem wiederholten Ausführen mit den in der zweiten Zeichenliste verbleibenden Zeichen durchgeführt.

Gemäß einer weiteren Ausführungsform wird der dritte Passwortwahrscheinlichkeitswert durch Multiplizieren des Wahrscheinlichkeitswertes des zweiten spezifischen Knotens mit dem dritten Maximierungsergebnis ermittelt.

Gemäß einer weiteren Ausführungsform weist das Anwenden der dritten Backtracking-Entscheidungs-Funktion ferner ein Ermitteln eines oder mehrerer Entscheidungswahrscheinlichkeitswerte in Abhängigkeit zumindest einer mathematischen Logarithmierungsfunktion auf, wobei jeder der einen oder mehreren ermittelten Entscheidungwahrscheinlichkeitswerte zu je einem in einer Zeichenliste eines Knotens oberhalb des zweiten spezifischen Knotens verbliebenen Zeichens gehört, wobei jeder der einen oder mehreren ermittelten Entscheidungswahrscheinlichkeitswerte mit Exponenten eines ermittelten Polynoms für den zur Zeichenliste gehörenden Knoten verglichen wird, um eine Anzahl von möglichen Passwörtern, welche in einem oder mehreren Knoten oberhalb des zweiten spezifischen Knotens vorhanden sind, zu erhalten, wobei der dritte Variablenwert durch Vergleichen der erhaltenen Anzahl von möglichen Passwörtern mit der Anzahl von noch für die Passwortliste zu generierenden Passwörtern verglichen wird, wobei die Anzahl von noch für die Passwortliste zu generierenden Passwörtern in Abhängigkeit des Wertes des Passwortzählers bestimmt wird.

Durch das Anwenden der dritten Backtracking-Entscheidungs-funktion wird insbesondere ermittelt, ob es sich für ein verbliebenes Zeichen ausgehend von dem ersten spezifischen Knoten lohnt, ein drittes Backtracking von dem zweiten spezifischen Knoten in den ersten spezifischen Knoten vorzunehmen, um dann in dem Knoten und in Pfaden unterhalb von dessen weiteren Kanten, welche sich durch Anhängen des verbliebenen Zeichens an den ersten spezifischen Knoten ergeben, nach Passwörtern zu suchen, welche mindestens einen so hohe Wahrscheinlichkeitswert aufweisen, wie der dritte Passwortwahrscheinlichkeitswert.

Insbesondere wenn die Anzahl von möglichen Passwörtern kleiner als die Anzahl von noch für die Passwortliste zu generierenden Passwörtern ist, wird als ein Variablenwert, beispielsweise der zweite oder dritte Variablenwert, der Rückgabewert wahr ermittelt. Wenn vorzugsweise die Anzahl von möglichen Passwörtern größer als die Anzahl von noch für die Passwortliste zu generierenden Passwörtern ist, wird als ein Variablenwert der Rückgabewert falsch ermittelt.

Gemäß einer weiteren Ausführungsform erhält die mathematische Logarithmierungsfunktion als Eingangsparameter zumindest den dritten Passwortwahrscheinlichkeitswert, den vom trainierten neuronalen Netz ermittelten Wahrscheinlichkeitswert für das in der Zeichenliste des Knotens oberhalb des zweiten spezifischen Knotens verbliebene Zeichen, den Wahrscheinlichkeitswert des Knotens und den vorbestimmten Wahrscheinlichkeitswert, wobei der Knoten dem Wurzelknoten oder dem ersten spezifischen Knoten entspricht, wobei die Zeichenliste der ersten Zeichenliste oder der zweiten Zeichenliste entspricht, wobei durch Anwenden eines Logarithmus durch die mathematische Logarithmierungsfunktion auf den Quotienten aus dem dritten Passwortwahrscheinlichkeitswert und dem Produkt aus dem Wahrscheinlichkeitswert des Knotens, dem vom trainierten neuronalen Netz ermittelten Wahrscheinlichkeitswert für das in der Zeichenliste des Knotens oberhalb des zweiten spezifischen Knotens verbliebene Zeichen und dem vorbestimmten Wahrscheinlichkeitswert der eine oder mehrere Entscheidungwahrscheinlichkeitswerte ermittelt werden.

Wie bereits in einer Ausführungsform oben erläutert, wird durch das Bestimmen des dritten Variablenwertes gemäß Schritt c310) durch Anwenden der dritten Backtracking-Entscheidungs-Funktion entschieden, wann die Pfade unterhalb des aktuellen Knotens, hier der zweite spezifische Knoten, durch die Tiefensuche so weit abgesucht wurden, dass es aussichtsreicher ist, ein drittes Backtracking vorzunehmen, um weitere Passwörter unterhalb von höher gelegenen Knoten in Richtung des Wurzelknotens zu finden, die aber nicht unterhalb des aktuellen Knotens liegen.

Diese Entscheidung wird im Rahmen des Anwendens der dritten Backtracking-Entscheidungs-Funktion nachfolgend genauer erläutert:

Innerhalb des Anwendens der dritten Backtracking-Entscheidungs-Funktion wird zumindest ein Entscheidungswahrscheinlichkeitswert in Abhängigkeit der mathematischen Logarithmierungsfunktion ermittelt. Diese mathematische Logarithmierungsfunktion erhält insbesondere mehrere Eingangsparameter:

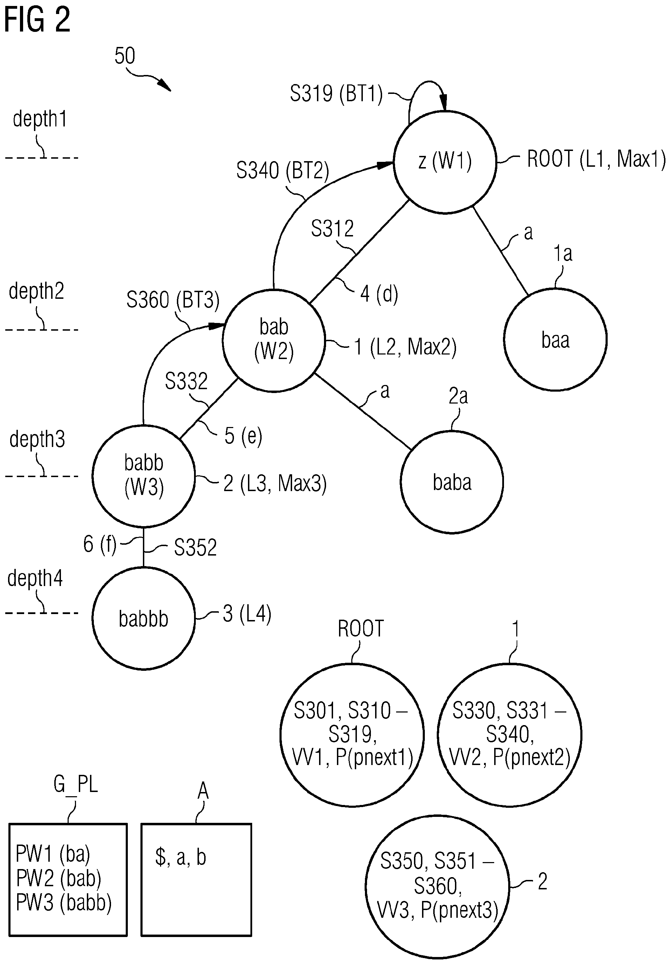

Ein erster Eingangsparameter ist vorzugsweise der dritte Passwortwahrscheinlichkeitswert. Der dritte Passwortwahrscheinlichkeitswert ist die Wahrscheinlichkeit eines Passwortes "pnext3" (siehe Fig. 2 unten) oberhalb des aktuellen Knotens, welcher in diesem Fall der zweite spezifische Knoten ist, welches unter den verbleibenden Passwörtern die höchste Wahrscheinlichkeit aufweist.

Ein zweiter Eingangsparameter ist ein jeweiliger Zustand eines jeden Knotens oberhalb des aktuellen Knotens auf dem Pfad von dem Wurzelknoten bis zu dem aktuellen Knoten. Der Zustand kann mittels zweier Zustandsparameter beschrieben werden. Der erste Zustandsparameter ist vorzugsweise der vom trainierten neuronalen Netz ermittelte Wahrscheinlichkeitswert für ein in der Zeichenliste des Knotens oberhalb des zweiten spezifischen Knotens verbliebene Zeichen. Dies ist beispielsweise das Zeichen a im ersten spezifischen Knoten. Der vom trainierten neuronalen Netz ermittelte Wahrscheinlichkeitswert für das in der Zeichenliste des Knotens oberhalb des zweiten spezifischen Knotens verbliebene Zeichen wird insbesondere durch die zweite Wahrscheinlichkeitsverteilung, welche beispielsweise als v("bab", "a") ausgebildet ist, durch Anwenden des trainierten neuronalen Netzes auf die erste spezifische Zeichenfolge und das verbliebene Zeichen erhalten. Die zweite Wahrscheinlichkeitsverteilung wird insbesondere als ein Element (V[i], hier V[1]) einer Stackliste "V" beschrieben. Der zweite Zustandsparameter ist insbesondere ein Stacklistenelement (C[i], hier C[1]), welches die in dem Knoten oberhalb des zweiten spezifischen Knotens bereits durchprobierten Zeichen aus dem vorbestimmten Alphabet aufweist, die jeweils einer von dem Knoten oberhalb des zweiten spezifischen Knotens ausgehenden Kante entsprechen. Das letzte Zeichen in der Liste C[i] ist vorzugsweise das aktuell betrachtete Zeichen.

Ein dritter Eingangsparameter ist insbesondere der Wahrscheinlichkeitswert des Knotens oberhalb des zweiten spezifischen Knotens.

Ein vierter Eingangsparameter ist vorzugsweise der vorbestimmte Wahrscheinlichkeitswert, welcher als "p$" bezeichnet wird. Falls das Sonderzeichen ein anderes Zeichen als das Dollar-Zeichen $ aufweist, wird der vorbestimmte Wahrscheinlichkeitswert anders bezeichnet. Wenn das Sonderzeichen beispielsweise ein Paragraf § ist, kann der vorbestimmte Wahrscheinlichkeitswert als "p§" ausgebildet sein.

Die so durch die mathematische Logarithmierungsfunktion ermittelten Entscheidungswahrscheinlichkeitswerte für die in der Zeichenliste verbliebenen Zeichen werden anschließend mit Exponenten eines ermittelten Polynoms für den jeweiligen Knoten oberhalb des zweiten spezifischen Knotens verglichen, um jeweils eine Anzahl von Passwörtern mit einer höheren Wahrscheinlichkeit als der dritte Passwortwahrscheinlichkeitswert ("pnext3") zu ermitteln. Die Summe der so ermittelten Anzahlen wird mit der Anzahl von noch für die Passwortliste zu generierenden Passwörtern verglichen, um den dritten Variablenwert zu erhalten.

Mit anderen Worten soll insbesondere durch den erhaltenen dritten Variablenwert vorhergesagt werden, ob es in den Vorgängerknoten bzw. unterhalb von deren Kanten genügend Passwörter (d.h. mindestens so viele wie noch zu generierende Passwörter) gibt, die mindestens einen genauso hohen Wahrscheinlichkeitswert aufweisen, wie der dritte Passwortwahrscheinlichkeitswert. Diese Passwörter, die es möglicherweise in den Vorgängerknoten gibt, entsprechen der erhaltenen Anzahl von möglichen Passwörtern.

Insbesondere werden einmal besuchte Knoten nach einem jeweiligen Backtracking ausgehend von diesem besuchten Knoten nie wieder bei dem Durchsuchen der Datenstruktur gemäß Schritt c) erreicht.

Zur genaueren Beschreibung einer Backtracking-Entscheidungs-Funktion "O" (V[i], C[i], R1, P(pnext)) werden insbesondere zwei vereinfachende Annahmen über die Knoten in der Datenstruktur gemacht, für welche das trainierte neuronale Netz noch nicht zum Einsatz kam:

Annahme 1: Der vorbestimmte Wahrscheinlichkeitswert (v(z,"$")) für das Passwortende gleicht für alle Knoten der Baumstruktur einer Konstante p$, für welche gilt: p$ > 0, was wiederrum bedeutet, dass p$ unabhängig von der vorbestimmten Anfangszeichenfolge ist.

Annahme 2: Betrachtet man für einen beliebigen Knoten auf Tiefenstufe i der Baumstruktur die Menge der Wahrscheinlichkeitswerte (v(z, x)) über alle $x \in A \setminus \{"\$"\}$ (mit ihren Vielfachheiten), erhält man stets dieselbe Wahrscheinlichkeitsverteilung $F_i$. Es treten also in der Tiefe i immer dieselben Einzelwahrscheinlichkeiten (ggf. mehrfach) auf, aber die Wahrscheinlichkeiten können (bis auf "$") in jedem Knoten anderen Zeichen aus dem vorbestimmten Alphabet zugeordnet sein.

Annahme 1 sorgt dafür, dass im aktuell (untersuchten) Knoten direkt klar ist, welcher Schritt zur Erzeugung des wahrscheinlichsten Passwortes pnext unterhalb des aktuellen Knotens gewählt werden muss: Da jedes erzeugte Passwort unterhalb des aktuellen Knotens mit der Wahl von "$" abgeschlossen werden muss und die Wahrscheinlichkeit hierfür nach Annahme 1 für alle auf den aktuellen Knoten folgenden Knoten konstant ist, entsteht das wahrscheinlichste Passwort pnext entweder durch direkte Wahl von "$" (mit der Wahrscheinlichkeit P(z) * v(z,"$")) oder durch Wahl desjenigen (aus den in dem vorbestimmten Alphabet bzw. der jeweiligen Zeichenliste verbleibenden) Zeichens, hier beispielsweise das Zeichen a, mit dem höchsten Wahrscheinlichkeitswert aus der Wahrscheinlichkeitsverteilung v(z,-) des aktuellen Knotens, gefolgt von der Wahl von "$" im Nachfolgeknoten (mit der Wahrscheinlichkeit P(z) * v(z, a) * p$). Folglich ist P(pnext)= max (P(z) * v(z,"$"), P(z) * v(z, a) * p$) (siehe auch Fig. 2 unten).

Hierbei ist folgendes zu beachten: Für die Berechnung dieser Wahrscheinlichkeiten wird also priorisiert auf die Vorhersage aus den Wahrscheinlichkeiten (v(z,-)) der erhaltenen Wahrscheinlichkeitsverteilung des angewendeten trainierten neuronalen Netzes zurückgegriffen. Die Annahmen 1 und 2 kommen nur für den Folgeknoten zum Einsatz, für welchen noch keine erhaltene Wahrscheinlichkeitsverteilung (v(z, -) vorliegt.

Durch die Annahmen 1 und 2 kann man auf einfache Art und Weise die Anzahl von möglichen Passwörtern mit einer Wahrscheinlichkeit $\geq$ P(pnext) abschätzen, die nach einem Backtrackingschritt in einem Vorgängerknoten generiert werden würde.

Nachfolgend wird die Berechnung der Abschätzung der erhaltenen Anzahl von möglichen Passwörtern mit einem Wahrscheinlichkeitswert $\geq$ P(pnext) genauer erläutert:

Sei jede Wahrscheinlichkeitsverteilung $F_i$ gegeben durch das Polynom $f_i = (y^{wi,0} + y^{wi,1} + ... + y^{wi,s-2})$. Die $w_{i,j}$ stellen dabei die natürlich logarithmierte Wahrscheinlichkeit des j-ten Zeichens aus dem vorbestimmten Alphabet $A \setminus \{"\$"\}$ gemäß der Wahrscheinlichkeitsverteilung $F_i$ dar. Es gilt also sum(exp($w_{i,l}$),l=0..s-2) + p$ = 1 ("exp" ist dabei die Exponentialfunktion, also die Umkehrfunktion des natürlichen Logarithmus). Hieraus ergibt sich, wegen p$ > 0, auch exp($w_{i,l}$) < 1 bzw. $w_{i,l}$ < 0 für alle l ("l" entspricht der maximalen Passwortlänge). Beim Multiplizieren von Summanden zweier solcher Polynome werden deren Exponenten addiert. Damit mache man sich Folgendes klar:

Der Koeffizient a des Monoms $a * y^w$ im Polynom $g_{i,k} := f_i * f_{i+1} * ... * f_{i+k-1}$ entspricht der erwarteten Anzahl von möglichen Passwörtern, die sich mit der Wahrscheinlichkeit P(z) * exp(w) * p$ ergeben, wenn ausgehend von einem Knoten zum String z (z.B. die vorbestimmte Anfangszeichenfolge) auf Tiefe i in der Baumstruktur noch genau k Zeichen aus dem vorbestimmten Alphabet $A \setminus \{"\$"\}$ und anschließend einmal "$" hinzugenommen werden.

Für die kumulierten Polynome $h_{i,k}$:=sum($g_{i,l}$,l=0..k) gilt analog: Der Koeffizient von $y^w$ in $h_{i,k}$ entspricht der erwarteten Anzahl von möglichen Passwörtern, die sich mit der Wahrscheinlichkeit P(z) * exp(w) * p$ ergeben, wenn ausgehend von einem Knoten zum String z auf Tiefe i in der Baumstruktur noch bis zu k Zeichen und anschließend einmal "$" hinzugenommen werden.

Man beachte, dass für die praktische Implementierung des computer-implementierten Verfahrens gemäß dem ersten Aspekt und dessen Ausführungsformen immer nur die r $\leq$ n Monome mit den höchstwertigen Exponenten von $h_{i,k}$ (gezählt mit den Werten ihrer Koeffizienten als Vielfachheit) interessant sind: Die Frage im Sinne des computer-implementierten Verfahrens gemäß dem ersten Aspekt und dessen Ausführungsformen lautet jeweils, wie viele Monome mit einem Exponenten eines bestimmten Mindestwerts es in $h_{i,k}$ gibt, wobei bei der Antwort Werte >r auf r "abgerundet" werden können, ohne irgendetwas zu verändern (da die so ermittelten, nicht-negativen Anzahlen aufaddiert werden und nur geprüft wird, ob deren Summe $\geq$ r ist, siehe die Ausführungen weiter unten). Das so reduzierte Polynom werde mit $h_{i,k,r}$ bezeichnet. Da r im Laufe des Durchführens der Tiefensuche gemäß dem Anhang (siehe Anhang) immer nur abnimmt, enthält das erste auf diese Weise berechnete reduzierte Polynom $h_{i,k,r}$ mindestens dieselbe Information wie alle später benötigten Polynome $h_{i,k,r'}$. Demzufolge muss für jedes Paar i, k im Laufe des Algorithmus höchstens ein $h_{i,k,r}$ bestimmt werden.

Da $g_{i,k+1} = g_{i,k} * f_{i+k}$ gilt und bei dieser Multiplikation jeder Summand S mit Exponent e aus $g_{i,k}$ (wegen $w_{i,l}$ < 0) nur Summanden mit kleineren Exponenten als e selbst generiert (welche im kumulierten $h_{i,k+1}$ in der Sortierung nach dem Summanden S kämen), sind für alle $g_{i,k}$ (die ja nur der Bestimmung eines $h_{i,k,r'}$ dienen) ebenfalls nur die r $\leq$ n Monome mit den höchstwertigen Exponenten (gezählt mit den Werten ihrer Koeffizienten als Vielfachheit) interessant. Wegen des monotonen Fallens von r im Laufe des Durchführens der Tiefensuche gemäß dem Anhang kann das auf diese Weise für den ersten Wert von r "reduzierte" $g_{i,k}$ auch an allen späteren Stellen wiederverwendet werden. Hierdurch lassen sich die Berechnungen in vorteilhafter Weise weiter beschleunigen.

Ferner fällt wegen "$w_{i,l}$ < 0 für alle l" der Grad (= Wert des höchsten Exponenten) von $g_{i,k}$ streng monoton mit k ("längere Passwörter werden zunehmend unwahrscheinlicher"), weshalb für einen in der Regel nicht allzu hohen Wert $k_i$' alle $h_{i,k,r}$ mit k $\geq$ $k_i$' identisch sind. Daher ist die Berechnung von $h_{i,k,r}$ - und damit auch von $g_{i,k}$ - für k > $k_i$' nicht mehr nötig (dies entspricht der Aussage, dass für die Entscheidung der Backtracking-Entscheidungs-Funktion nur die Wahrscheinlichkeiten von Stringerweiterungen bis zu einer Maximallänge $k_i$' relevant sind). Bei der praktischen Implementierung müssen also auch nur endlich viele $g_{i,k}$ berechnet werden.

Die Bestimmung der Anzahl von möglichen Passwörtern kann nun wie folgt geschehen:

1. Bestimme P(pnext) im aktuellen Knoten N zum String z (z.B. der vorbestimmten Anfangszeichenfolge) mittels P(pnext)= max (P(z) * v(z,"$"), P(z) * v(z, "a") * p$).

2. Setze T1 = 0.

3. Für jeden Vorgängerknoten N' (des aktuellen Knotens N) zum String z' auf Tiefe i und mit von dem trainierten neuronalen Netz erhaltenen Wahrscheinlichkeitsverteilungen v(z', -) führe Folgendes durch:

   a. Bestimme $h_{i+1,k',r}$ (k' wie oben) bzw. verwende $h_{i+1,k',r'}$ zu einem vorher aufgetretenen r' > r.

   b. Für jedes x $\in$ A \ C[i] inkrementiere t um die Zahl der Monome (gezählt mit den Werten ihrer Koeffizienten als Vielfachheit) in $h_{i+1,k',r}$, deren Exponent mindestens log(P(pnext) / [P(z') * $\cdot$ v(z' ,a) * $\cdot$ p$]) beträgt.

Für die Definition der Wahrscheinlichkeitsverteilungen $F_i$ (und von p$) sind insbesondere verschiedene Verfahren denkbar, beispielsweise:

i) Definieren einer Wahrscheinlichkeitsverteilung $F_i$ als ein Durchschnitt über mehrere erhaltene Wahrscheinlichkeitsverteilungen $v(z, -)$ für Knoten auf unterschiedlichen Tiefen i,

ii) Definieren einer Wahrscheinlichkeitsverteilung $F_i$ anhand der Buchstabenverteilungen von Wörtern in einer bestimmten Zielsprache, und/oder

iii) Wählen einer Wahrscheinlichkeitsverteilung $F_i$ derart, dass alle Zeichen (außer das Sonderzeichen "$") die gleiche Wahrscheinlichkeit aufweisen (diese so entstandene Wahrscheinlichkeitsverteilung wäre sehr grob, jedoch leicht zu berechnen).

Gemäß einer weiteren Ausführungsform werden bei der Bestimmung von $g_{i,k}$ bzw. $h_{i,k}$ bzw. $h_{i,k,r}$ Monome mit näherungsweise gleichen Exponenten zusammengefasst, insbesondere durch Addition ihrer Koeffizienten und Mittelwertbildung über ihre Exponenten. Dies reduziert den Rechenaufwand bei der Bestimmung der $g_{i,k}$ bzw. $h_{i,k}$ bzw. $h_{i,k,r}$.

Gemäß einer weiteren Ausführungsform wird ein Startstring ($z_0$) vorgegeben und die n wahrscheinlichsten Passwörter, die mit dem Startstring ($z_0$) beginnen, generiert (d.h. der Wurzelknoten des Baumes gehört nicht zum leeren String, sondern zu dem Startstring). Dies ist insbesondere vorteilhaft, um spezielle, hochwahrscheinliche Startstrings von bestimmten Produkten einer Firma, welche Aufschluss auf in diesen bestimmten Produkten vermutete Passwörter geben, zu generieren oder Passwörter aus existierenden Listen zu verlängern.

Gemäß einer weiteren Ausführungsform weist der Schritt a) vor dem Empfangen ferner den Schritt auf: Trainieren eines neuronalen Netzes anhand einer vorhandenen Passwortliste über das vorbestimmte Alphabet zum Erhalten des trainierten neuronalen Netzes, wobei das trainierte neuronale Netz zum Erhalten eines Wahrscheinlichkeitswerts für jedes Zeichen des vorbestimmten Alphabets, welches auf die vorbestimmte Anfangszeichenfolge oder eine der spezifischen Zeichenfolgen folgt, ausgebildet ist.

Der Vorteil dieser Ausführungsform ist, dass das neuronale Netz anhand der vorhandenen Passwortliste, welche insbesondere von Menschen gewählte Passwörter aufweist, trainiert wird. Hierbei wird sich insbesondere zunutze gemacht, dass eine vorhandene Passwortliste mit von Menschen gewählten Passwörtern oft Regelmäßigkeiten in diesen Passwörtern aufweist. Dadurch kann der Faktor der kombinatorischen Explosion in der Passwortlänge I reduziert werden und somit eine Passwortliste mit vergleichsweise hoher Dichte im Raum der "plausiblen Passwörter" erreicht werden.

Das Trainieren des neuronalen Netzes wird insbesondere wie folgt näher erläutert:

Das neuronale Netz wird anhand der vorhandenen Passwortliste über das vorbestimmte Alphabet einer Größe s insbesondere darauf trainiert, vorherzusagen, wie ein Passwort weitergeht. Dies bedeutet vorzugsweise, dass die Trainingssamples für das neuronale Netz aus Paaren x, y bestehen, bei denen x ein Substring eines Passwortes aus der vorhandenen Passwortliste ist und y der auf x folgende Buchstabe im Passwort.

Ferner weist das vorbestimmte Alphabet immer ein Sonderzeichen, beispielsweise ein Dollar-Zeichen, auf, welches das Ende eines Passwortes anzeigt. Daher kann x auch ein komplettes Passwort aus der vorhandenen Passwortliste umfassen, wobei dann in diesem Fall gilt: y = "$".

Mit Hilfe der vorhandenen Passwortliste wird ein neuronales Netz darauf trainiert, zu einer vorbestimmten Anfangszeichenfolge z eine Wahrscheinlichkeitsverteilung $v(z, -)$ zu prognostizieren. Die Wahrscheinlichkeit $v(z, x)$ kann dabei als Wahrscheinlichkeit interpretiert werden, dass das Zeichen x aus einem vorbestimmten Alphabet das nächste auf z folgende Zeichen in einem Passwort wäre.

Gemäß einer weiteren Ausführungsform umfasst die vorhandene Passwortliste Passwörter in einer bestimmten Sprache und/oder Passwörter in einem bestimmten Umfeld.

Das bestimmte Umfeld ist beispielsweise ein technisches Umfeld.

Gemäß einem zweiten Aspekt wird ein Computerprogrammprodukt vorgeschlagen, umfassend Befehle, die bei der Ausführung des Programms durch einen Computer diesen veranlassen, das Verfahren gemäß dem ersten Aspekt oder einer Ausführungsform des ersten Aspekts auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Kommunikationssystem zum Identifizieren von Sicherheitslücken in einer Entität vorgeschlagen. Das Kommunikationssystem weist eine Prüf-Vorrichtung und die Entität auf, wobei die Prüf-Vorrichtung aufweist:

eine Empfangs-Einheit zum Empfangen eines trainierten neuronalen Netzes,

eine Erhaltungs-Einheit zum Erhalten einer oder mehrerer Wahrscheinlichkeitsverteilungen über ein vorbestimmtes Alphabet in Abhängigkeit einer vorbestimmten Anfangszeichenfolge und/oder in Abhängigkeit zumindest einer spezifischen Zeichenfolge aus mehreren spezifischen Zeichenfolgen durch Anwenden des trainierten neuronalen Netzes auf die vorbestimmte Anfangszeichenfolge oder eine der mehreren spezifischen Zeichenfolgen, wobei durch die eine oder mehreren erhaltenen Wahrscheinlichkeitsverteilungen jeweils jedem Zeichen aus dem vorbestimmten Alphabet ein jeweiliger Wahrscheinlichkeitswert zugeordnet wird, und

eine Durchsuchungs-Einheit zum Durchführen einer Tiefensuche in einer Datenstruktur, insbesondere in einer Baumstruktur, mittels Durchsuchen der Datenstruktur in Abhängigkeit der einen oder mehreren erhaltenen Wahrscheinlichkeitsverteilungen und des vorbestimmten Alphabets zum Generieren einer Passwortliste einer vorbestimmten Listengröße aufweisend eine Anzahl von Passwörtern,

wobei die Prüf-Vorrichtung ferner eine Prüfeinheit aufweist, welche dazu eingerichtet ist, Sicherheitslücken in der Entität mittels der Anzahl von Passwörtern der generierten Passwortliste zu identifizieren.

Das Kommunikationssystem kann insbesondere innerhalb einer Automatisierungsanlage implementiert werden. Die Automatisierungsanlage kann eine Anlage aus der Prozessindustrie, der chemischen Industrie, der pharmazeutischen Industrie, der petrochemischen Industrie oder eine Anlage aus der Lebensmittel- und Getränkeindustrie sein. Dazu gehören auch beliebige Anlagen aus der Fertigungs- und Produktionsindustrie und Anlagen, in denen z.B. Autos oder Güter jeglicher Art produziert werden. Darüber hinaus kann die Automatisierungsanlage auch als Energieerzeugungsanlage, wie z.B. eine Windkraftanlage, eine Solaranlage oder ein Kraftwerk und/oder als Energieverteilungsanlage ausgeführt sein.

Die jeweilige Einheit, zum Beispiel die Prüfeinheit oder die Durchsuchungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das computer-implementierte Verfahren gemäß dem ersten Aspekt beschriebenen technischen Effekte und Vorteile gelten gleichermaßen für das Kommunikationssystem gemäß dem dritten Aspekt.

Ferner gelten die Ausführungsformen und Merkmale, die unter Bezugnahme auf das computer-implementierte Verfahren gemäß dem ersten Aspekt beschrieben wurden gleichermaßen auch für das Kommunikationssystem gemäß dem dritten Aspekt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Unabhängig vom grammatikalischen Geschlecht eines bestimmten Begriffes sind Personen mit männlicher, weiblicher oder anderer Geschlechteridentität mit umfasst.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt ein schematisches Ablaufdiagram eines computer-implementierten Verfahrens zum Identifizieren von Sicherheitslücken in einer Entität;

Fig. 2    zeigt ein schematisches Blockdiagram eines Durchführens einer Tiefensuche in einer Datenstruktur; und

Fig. 3    zeigt ein schematisches Blockdiagram eines Kommunikationssystems zum Identifizieren von Sicherheitslücken in einer Entität.

In den Figuren sind gleiche oder funktionsgleiche Elemente mit denselben Bezugszeichen versehen worden, sofern nichts anderes angegeben ist.

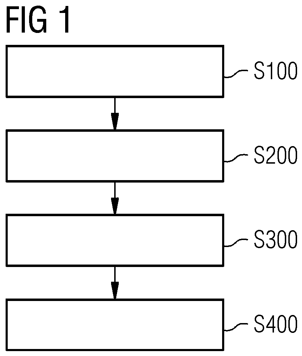

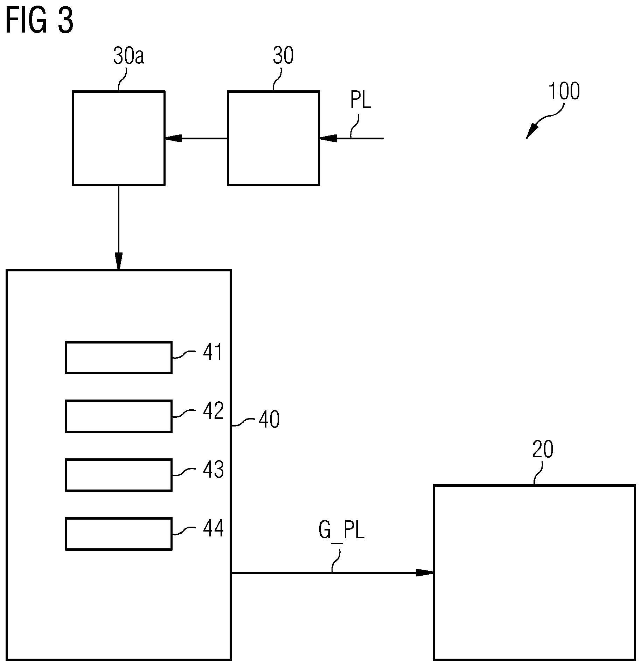

Fig. 1 zeigt ein schematisches Ablaufdiagram eines computer-implementierten Verfahrens zum Identifizieren von Sicherheitslücken in einer Entität 20 (siehe Fig. 3) in einem Kommunikationssystem 100 (siehe Fig. 3) mittels einer generierten Passwortliste G_PL (siehe Fig. 2 oder Fig. 3). Das computer-implementierte Verfahren weist die Verfahrensschritte S100 bis S400 auf.

In Schritt S100 der Fig. 1 wird ein trainiertes neuronales Netz 30a (siehe Fig. 3) empfangen. Zudem weist der Schritt S100 vor dem Empfangen ferner den Schritt auf:
Trainieren eines neuronalen Netzes 30 (siehe Fig. 3) anhand einer vorhandenen Passwortliste PL (siehe Fig. 3) über ein vorbestimmtes Alphabet A (siehe Fig. 2) zum Erhalten des trainierten neuronalen Netzes 30a, wobei das trainierte neuronale Netz 30a zum Erhalten eines Wahrscheinlichkeitswerts für jedes Zeichen des vorbestimmten Alphabets A, welches auf eine vorbestimmte Anfangszeichenfolge z (siehe Fig. 2) oder eine der spezifischen Zeichenfolgen bab, babb, babbb (siehe Fig. 2) folgt, ausgebildet ist. Weiterhin umfasst die vorhandene Passwortliste PL Passwörter in einer bestimmten Sprache oder Passwörter in einem bestimmten Umfeld.

Das trainierte neuronale Netz weist bei dem Anwenden insbesondere als einen Eingangsparameter die vorbestimmte Anfangszeichenfolge z und als einen Ausgabeparameter eine Wahrscheinlichkeitsverteilung v(z, -), beispielsweise eine erste Wahrscheinlichkeitsverteilung W1 (siehe Fig. 2), über das vorbestimmte Alphabet A auf, durch die jedem Zeichen, welches hier als "c" repräsentiert wird, aus dem vorbestimmten Alphabet A eine Wahrscheinlichkeit v(z, c) zugeordnet wird. Vorzugsweise summieren sich die Wahrscheinlichkeiten v(z, c) dabei über alle Zeichen "c" hinweg zu 1. Ferner korrespondiert die Wahrscheinlichkeit v(z, c) mit der Wahrscheinlichkeit, dass ein Zeichen "c" in einem Passwort, dass mit der vorbestimmten Anfangszeichenfolge z beginnt, als nächster Buchstabe oder als Passwortende im Falle des Sonderzeichens auftreten würde.

Weiter wird in Schritt S200 der Fig. 1 eine oder mehrere Wahrscheinlichkeitsverteilungen W1, W2, W3 (siehe Fig. 2) über das vorbestimmte Alphabet A in Abhängigkeit der vorbestimmten Anfangszeichenfolge z und/oder in Abhängigkeit zumindest einer spezifischen Zeichenfolge bab aus mehreren spezifischen Zeichenfolgen bab, babb, babbb durch Anwenden des trainierten neuronalen Netzes 30a auf die vorbestimmte Anfangszeichenfolge z oder eine der mehreren spezifischen Zeichenfolgen bab, babb, babbb erhalten. Ferner wird durch die eine oder mehreren erhaltenen Wahrscheinlichkeitsverteilungen W1, W2, W3 jeweils jedem Zeichen aus dem vorbestimmten Alphabet A ein jeweiliger Wahrscheinlichkeitswert zugeordnet.

Überdies wird in Schritt S300 der Fig. 1 eine Tiefensuche in einer Datenstruktur 50 (siehe Fig. 2), insbesondere in einer Baumstruktur, mittels Durchsuchen der Datenstruktur 50 in Abhängigkeit der einen oder mehreren erhaltenen Wahrscheinlichkeitsverteilungen W1, W2, W3 und des vorbestimmten Alphabets A zum Generieren der Passwortliste G_PL einer vorbestimmten Listengröße aufweisend eine Anzahl von Passwörtern durchgeführt.

Anschließend werden in Fig. 1 in Schritt S400 Sicherheitslücken in der Entität 20 mittels der Anzahl von Passwörtern der generierten Passwortliste G_PL identifiziert.

Fig. 2 zeigt ein schematisches Blockdiagramm eines Durchführens einer Tiefensuche in einer Datenstruktur 50. In Fig. 2 ist die Datenstruktur 50 als eine Baumstruktur ausgebildet.

Die Datenstruktur 50 in Fig. 2 weist einen Wurzelknoten ROOT auf. Der Wurzelknoten ROOT repräsentiert die vorbestimmte Anfangszeichenfolge z, welche beispielsweise den String "ba" aufweist, mit dem Wahrscheinlichkeitswert Eins. Wie in Fig. 2 dargestellt, ist der Wurzelknoten ROOT in einer ersten Tiefe depth1 der Datenstruktur 50 angeordnet.

In Fig. 2 wird eine erste Wahrscheinlichkeitsverteilung W1 der mehreren Wahrscheinlichkeitsverteilungen W1, W2, W3 durch Anwenden des trainierten neuronalen Netzes 30a (siehe Fig. 3) auf die vorbestimmte Anfangszeichenfolge z erhalten. Ferner weist das vorbestimmte Alphabet A ein Sonderzeichen $ auf. Diese erhaltene erste Wahrscheinlichkeitsverteilung W1 ordnet dem Sonderzeichen $ einen Wahrscheinlichkeitswert zu.

Nachfolgend wird anhand der Fig. 2 das Durchführen der Tiefensuche in der Datenstruktur 50 mittels Durchsuchen der Datenstruktur 50 gemäß Schritt S300 (siehe Fig. 1) im Detail erläutert:

Das Durchsuchen der Datenstruktur 50 in dem Schritt S300 weist ferner die Schritte auf:

Festlegen der vorbestimmten Listengröße, wobei die vorbestimmte Listengröße eine Anzahl M1 von zu generierenden Passwörtern aufweist,
Generieren einer leeren Passwortliste G_PL,
Initialisieren eines Passwortzählers mit dem Wert Null,
Festlegen des Wurzelknotens ROOT als den aktuellen Knoten,
Anlegen einer ersten Zeichenliste L1 für den Wurzelknoten ROOT, die zum Zeitpunkt des Anlegens genau die Zeichen des vorbestimmten Alphabets A umfasst, und
Ausführen eines Passwortschemas zum Generieren zumindest eines Passwortes, wobei das Ausführen des Passwortschemas die folgenden Schritte S301 und S310 aufweist:

In dem Schritt S301 wird ein ersten Maximierungsergebnis Max1 durch Anwenden einer ersten Maximierungsfunktion auf eine Anzahl N1 von Produkt-Wahrscheinlichkeitswerten zu den in der ersten Zeichenliste L1 verbleibenden Zeichen ermittelt.

Die Anzahl N1 entspricht der Anzahl der in der ersten Zeichenliste L1 verbleibenden Zeichen, wobei der dem Sonderzeichen $ zugeordnete Produkt-Wahrscheinlichkeitswert dem vom trainierten neuronalen Netz 30a ermittelten Wahrscheinlichkeitswert multipliziert mit Eins entspricht, und jeder einem anderen Zeichen als dem Sonderzeichen $ aus der ersten Zeichenliste L1 zugeordnete Produkt-Wahrscheinlichkeitswert durch Multiplikation des für dieses Zeichen erhaltenen Wahrscheinlichkeitswertes aus der ersten Wahrscheinlichkeitsverteilung W1 mit einem vorbestimmten Wahrscheinlichkeitswert p$ erhalten wird.

**EP 4 481 600 A1**

In Schritt S301 wird als das erste Maximierungsergebnis Max1 derjenige Wahrscheinlichkeitswert aus der Anzahl N1 von Produkt-Wahrscheinlichkeitswerten ermittelt, welcher den höchsten Wert aufweist.

Anschließend wird in dem Schritt S310 ein erster Variablenwert VV1 durch Anwenden einer ersten Backtracking-Entscheidungs-Funktion auf einen ermittelten ersten Passwortwahrscheinlichkeitswert P(pnext1) bestimmt. Hierbei wird der erste Passwortwahrscheinlichkeitswert P(pnext1) durch Multiplizieren des Wahrscheinlichkeitswertes für den Wurzelknoten mit dem ersten Maximierungsergebnis Max1 ermittelt. Ferner wird der erste Variablenwert VV1 durch Anwenden der ersten Backtracking-Entscheidungs-Funktion auf den ermittelten ersten Passwortwahrscheinlichkeitswert P(pnext1), auf einen Zustand des Wurzelknotens ROOT und auf eine Anzahl R1 von noch für die Passwortliste zu generierenden Passwörtern bestimmt.

Die jeweiligen Schritte, welche in einem jeweiligen Knoten wie dem Wurzelknoten ROOT durchgeführt werden, sowie deren Ergebnisse werden in Fig. 2 innerhalb von Kreisen dargestellt, um zu erläutert, welche Schritte mit welchen Ergebnissen in welchem jeweiligen Knoten im Zuge des Durchsuchens der Datenstruktur 50 durchgeführt werden.

In Abhängigkeit davon, ob der erste Variablenwert VV1 (also der Rückgabewert) wahr oder falsch ist, werden nachfolgend unterschiedliche Schritte innerhalb und/oder ab dem Wurzelknoten ROOT durchgeführt. Diese unterschiedlichen Fälle werden zur besseren Übersicht in unterschiedliche Fälle 1 bis 3 unterteilt, welche jeweils mit einer "ODER"-Verknüpfung zusammenhängen:

1. Fall im Wurzelknoten ROOT:

Wenn der erste Variablenwert VV1 wahr ist und wenn als das erste Maximierungsergebnis Max1 der zu dem Sonderzeichen $ zugeordnete Produkt-Wahrscheinlichkeitswert ermittelt wird, wird der Schritt S311 durchgeführt. Dies kann auch als der 1. Fall im Wurzelknoten ROOT bezeichnet werden. Hierbei wird die vorbestimmte Anfangszeichenfolge z, welche durch den Wurzelknoten ROOT repräsentiert wird, als ein Passwort in die Passwortliste aufgenommen.

Dabei weist der Schritt S311 die folgenden Teilschritte auf:

Anhängen des Sonderzeichens $ an die vorbestimmte Anfangszeichenfolge z zum Erhalten der vorbestimmten Anfangszeichenfolge z als ein erstes oder ein weiteres Passwort PW1,
Entfernen des Sonderzeichens $ aus der ersten Zeichenliste L1, und
Hinzufügen des ersten oder des weiteren Passwortes PW1 zu der generierten Passwortliste G_PL und Erhöhen des Wertes des Passwortzählers um Eins.

Falls der Wert des Passwortzählers gleich der Anzahl M1 ist, wird das Durchführen der Tiefensuche gemäß Schritt S300 beendet und mit dem Schritt S400 (siehe Fig. 1) fortgefahren.

2. Fall im Wurzelknoten ROOT:

Wenn der erste Variablenwert VV1 wahr ist und wenn als das erste Maximierungsergebnis Max1 ein erster bestimmter Wahrscheinlichkeitswert aus den Produkt-Wahrscheinlichkeitswerten, welcher nicht dem zu dem Sonderzeichen $ zugeordneten Produkt-Wahrscheinlichkeitswert entspricht, ermittelt wird, werden die Schritte S312 bis S318 durchgeführt. Dies kann auch als der 2. Fall im Wurzelknoten ROOT bezeichnet werden. Hierbei wird an die vorbestimmte Anfangszeichenfolge z dasjenige Zeichen angehängt, welches dem ersten bestimmten Wahrscheinlichkeitswert zugeordnet ist, um eine erste spezifische Zeichenfolge bab, welche einem ersten spezifischen Knoten 1 zugeordnet ist, zu ermitteln. Anschließend wird in dem ersten spezifischen Knoten 1 in einer zweiten Tiefe depth2 das Durchsuchen fortgesetzt.

Der Schritt S312 weist auf:
Anhängen eines ersten Zeichens d="b", welches dem ersten bestimmten Wahrscheinlichkeitswert zugeordnet ist, an die vorbestimmte Anfangszeichenfolge z zum Ermitteln einer ersten spezifischen Zeichenfolge bab, welche einem ersten spezifischen Knoten 1 zugeordnet ist, welcher durch Anhängen des ersten Zeichens d an die vorbestimmte Anfangszeichenfolge z ermittelt wird.

Anschließend werden die Schritte S313 bis S318 durchgeführt:

Entfernen des ersten Zeichens d aus der ersten Zeichenliste L1 (Schritt S313),
Anlegen einer zweiten Zeichenliste L2 für den ersten spezifischen Knoten 1, die zum Zeitpunkt des Anlegens genau die Zeichen des vorbestimmten Alphabets A umfasst (Schritt S314),
Festlegen des Wahrscheinlichkeitswertes für den ersten spezifischen Knoten 1 durch Multiplikation des Wahrscheinlichkeitswertes des Wurzelknotens ROOT mit dem ersten Maximierungsergebnis Max1 (Schritt S315),
Festlegen des Wurzelknotens ROOT als einen ersten Rücksprungpunkt für den ersten spezifischen Knoten 1 zum Durchführen des zweiten Backtrackings BT2 (Schritt S316),

15

Festlegen des ersten spezifischen Knotens 1 als den aktuellen Knoten (Schritt S317), und
Fortsetzen des Durchsuchens der Datenstruktur 50 in dem Schritt S300 ab dem ersten spezifischen Knoten 1 (Schritt S318). Der erste spezifische Knoten 1 ist in der zweiten Tiefe depth2 der Datenstruktur 50 angeordnet.

Ferner ist in der Fig. 2 eine erste Kante 4 dargestellt, welche den Wurzelknoten ROOT und den ersten spezifischen Knoten 1 verbindet. Durch Anhängen des ersten Zeichens d="b", welches durch die erste Kante 4 repräsentiert wird, ergibt sich die erste spezifische Zeichenfolge bab, welche durch den ersten spezifischen Knoten 1 repräsentiert wird.

3. Fall im Wurzelknoten ROOT:

Wenn der erste Variablenwert VV1 falsch ist, wird ein erstes Backtracking BT1 gemäß Schritt S319 durchgeführt. Dies kann auch als der 3. Fall im Wurzelknoten ROOT bezeichnet werden.
Der Schritt S319 weist auf:
Durchführen eines ersten Backtrackings BT1, wobei bei dem Durchführen des ersten Backtrackings BT1 das Durchführen S300 der Tiefensuche abgebrochen wird.
Nachfolgend wird in dem ersten spezifischen Knoten 1 in Fig. 2 das Durchsuchen der Datenstruktur 50 in dem Schritt S300 fortgesetzt. Dies entspricht der Fortsetzung des 2. Falls des Wurzelknotens ROOT, bei welchem als das erste Maximierungsergebnis Max1 ein erster bestimmter Wahrscheinlichkeitswert aus den Produkt-Wahrscheinlichkeitswerten, welcher nicht dem zu dem Sonderzeichen $ zugeordneten Produkt-Wahrscheinlichkeitswert entspricht, ermittelt wurde.
Dieses Fortsetzen weist die Schritte S330 und S331 auf. In dem Schritt S330 wird eine zweite Wahrscheinlichkeitsverteilung W2 der mehreren Wahrscheinlichkeitsverteilungen W1, W2, W3 durch Anwenden des trainierten neuronalen Netzes 30a auf die erste spezifische Zeichenfolge bab erhalten.
Ferner wird in dem Schritt S330 ein zweites Maximierungsergebnis Max2 durch Anwenden einer zweiten Maximierungsfunktion auf eine Anzahl N2 von Produkt-Wahrscheinlichkeitswerten zu den in der zweiten Zeichenliste L2 verbleibenden Zeichen ermittelt.
Die Anzahl N2 entspricht der Anzahl der in der zweiten Zeichenliste L2 verbleibenden Zeichen, wobei der dem Sonderzeichen $ zugeordnete Produkt-Wahrscheinlichkeitswert dem in der zweiten Wahrscheinlichkeitsverteilung W2 ermittelten Wahrscheinlichkeitswert multipliziert mit Eins entspricht, und jeder einem anderen Zeichen als dem Sonderzeichen $ aus der zweiten Zeichenliste L2 zugeordnete Produkt-Wahrscheinlichkeitswert durch Multiplikation des für dieses Zeichen erhaltenen Wahrscheinlichkeitswertes aus der zweiten Wahrscheinlichkeitsverteilung W2 mit dem vorbestimmten Wahrscheinlichkeitswert p$ erhalten wird.
In dem Schritt S330 wird als das zweite Maximierungsergebnis Max2 derjenige Wahrscheinlichkeitswert aus der Anzahl N2 von Produkt-Wahrscheinlichkeitswerten ermittelt, welcher den höchsten Wert aufweist.
Anschließend wird in dem Schritt S331 ein zweiter Variablenwert VV2 durch Anwenden einer zweiten Backtracking-Entscheidungs-Funktion auf einen ermittelten zweiten Passwortwahrscheinlichkeitswert P(pnext2) ermittelt. Hierbei wird der zweite Passwortwahrscheinlichkeitswert P(pnext2) durch Multiplizieren des Wahrscheinlichkeitswertes des ersten spezifischen Knotens 1 mit dem zweiten Maximierungsergebnis Max2 ermittelt. Ferner wird der zweite Variablenwert VV2 durch Anwenden der zweiten Backtracking-Entscheidungs-Funktion auf den ermittelten zweiten Passwortwahrscheinlichkeitswert P(pnext2), auf einen jeweiligen Zustand aller jeweiligen Knoten von dem Wurzelknoten ROOT bis zu dem ersten spezifischen Knoten 1 und auf die Anzahl R1 von noch für die Passwortliste zu generierenden Passwörtern bestimmt.
Analog zu dem Wurzelknoten ROOT, werden in Abhängigkeit davon, ob der zweite Variablenwert VV2 wahr oder falsch ist, nachfolgend unterschiedliche Schritte innerhalb und/oder ab dem ersten spezifischen Knoten 1 durchgeführt. Diese unterschiedlichen Fälle werden zur besseren Übersicht in unterschiedliche Fälle 1 bis 3 unterteilt, welche jeweils mit einer "ODER"-Verknüpfung zusammenhängen:

1. Fall im ersten spezifischen Knoten 1:

Wenn der zweite Variablenwert VV2 wahr ist und wenn als das zweite Maximierungsergebnis Max2 der zu dem Sonderzeichen $ zugeordnete Produkt-Wahrscheinlichkeitswert ermittelt wird, wird der Schritt S332 durchgeführt. Dies kann auch als der 1. Fall im ersten spezifischen Knoten 1 bezeichnet werden. Hierbei wird die erste spezifische Zeichenfolge bab, welche durch den ersten spezifischen Knoten 1 repräsentiert wird, als ein Passwort in die Passwortliste aufgenommen.
Dabei weist der Schritt S332 die folgenden Teilschritte auf:

Anhängen des Sonderzeichens $ an die erste spezifische Zeichenfolge bab zum Erhalten der ersten spezifischen Zeichenfolge bab als ein erstes oder ein weiteres Passwort PW2,

Entfernen des Sonderzeichens $ aus der zweiten Zeichenliste L2, und

Hinzufügen des ersten oder des weiteren Passwortes PW2 zu der generierten Passwortliste G_PL und Erhöhen des Wertes des Passwortzählers um Eins.

Falls der Wert des Passwortzählers gleich der Anzahl M1 ist, wird das Durchführen der Tiefensuche gemäß Schritt S300 beendet und mit dem Schritt S400 fortgefahren.

2. Fall im ersten spezifischen Knoten 1:

Wenn der zweite Variablenwert VV2 wahr ist und wenn als das zweite Maximierungsergebnis Max2 ein zweiter bestimmter Wahrscheinlichkeitswert aus den Produkt-Wahrscheinlichkeitswerten, welcher nicht dem zu dem Sonderzeichen $ zugeordneten Produkt-Wahrscheinlichkeitswert entspricht, ermittelt wird, werden die Schritte S333 bis S339 durchgeführt. Dies kann auch als der 2. Fall im ersten spezifischen Knoten 1 bezeichnet werden. Hierbei wird an die erste spezifische Zeichenfolge bab dasjenige Zeichen angehängt, welches dem zweiten bestimmten Wahrscheinlichkeitswert zugeordnet ist, um eine zweite spezifische Zeichenfolge babb, welche einem zweiten spezifischen Knoten 2 zugeordnet ist, zu ermitteln. Anschließend wird in dem zweiten spezifischen Knoten 2 in einer dritten Tiefe depth3 das Durchsuchen fortgesetzt.

Der Schritt S333 weist auf:

Anhängen eines zweiten Zeichens e="b", welches dem zweiten bestimmten Wahrscheinlichkeitswert zugeordnet ist, an die erste spezifische Zeichenfolge bab zum Ermitteln einer zweiten spezifischen Zeichenfolge babb, welche einem zweiten spezifischen Knoten 2 zugeordnet ist, welcher durch Anhängen des zweiten Zeichens e an die erste spezifische Zeichenfolge bab ermittelt wird.

Anschließend werden die Schritte S334 bis S339 durchgeführt:

Entfernen des zweiten Zeichens e aus der zweiten Zeichenliste L2 (Schritt S334),

Anlegen einer dritten Zeichenliste L3 für den zweiten spezifischen Knoten 2, die zum Zeitpunkt des Anlegens genau die Zeichen des vorbestimmten Alphabets A umfasst (Schritt S335),

Festlegen des Wahrscheinlichkeitswertes für den zweiten spezifischen Knoten 2 durch Multiplikation des Wahrscheinlichkeitswertes für den ersten spezifischen Knoten 1 mit dem zweiten Maximierungsergebnis Max2 (Schritt S336),

Festlegen des ersten spezifischen Knotens 1 als einen zweiten Rücksprungpunkt für den zweiten spezifischen Knoten 2 zum Durchführen eines dritten Backtrackings BT3 (Schritt S337),

Festlegen des zweiten spezifischen Knotens 2 als den aktuellen Knoten (Schritt S338), und

Fortsetzen des Durchsuchens der Datenstruktur 50 in dem Schritt S300 ab dem zweiten spezifischen Knoten 2 (Schritt S339).

Ferner ist in der Fig. 2 eine zweite Kante 5 dargestellt, welche den ersten spezifischen Knoten 1 und den zweiten spezifischen Knoten 2 verbindet. Durch Anhängen des zweiten Zeichens e="b", welches durch die zweite Kante 5 repräsentiert wird, ergibt sich die zweite spezifische Zeichenfolge babb, welche durch den zweiten spezifischen Knoten 2 repräsentiert wird.

3. Fall im ersten spezifischen Knoten 1:

Wenn der zweite Variablenwert VV2 falsch ist, wird ein zweites Backtracking BT2 gemäß Schritt S340 durchgeführt. Dies kann auch als der 3. Fall im ersten spezifischen Knoten 1 bezeichnet werden.

Der Schritt S340 weist auf:

Durchführen eines zweiten Backtrackings BT2, aufweisend:

Fortsetzen des Durchsuchens der Datenstruktur 50 in dem Schritt S300 ab dem ersten Rücksprungpunkt, aufweisend:

Wiederholtes Ausführen der Schritte S301 - S318.

Anschließend können die Schritte S301 - S318 in dem Wurzelknoten erneut durchgeführt werden, jedoch mit einer reduzierten Zeichenliste L1 ohne das erste Zeichen d="b". Dies kann dann dazu führen, dass ein verbliebenes Zeichen a, welches eine Kante von dem Wurzelknoten ROOT zu einem zu dem ersten spezifischen Knoten benachbarten Knoten 1a repräsentiert, die höchste Wahrscheinlichkeit aufweist und damit als (erneutes) erstes Maximierungsergebnis erhalten werden würde. Dann würde das Durchsuchen gemäß Schritt S300 analog in dem zu dem ersten spezifischen Knoten benachbarten Knoten 1a mit der dann entstandenen Zeichenfolge "baa" fortgesetzt werden (siehe Fig. 2).

Nachfolgend wird in dem zweiten spezifischen Knoten 1 in Fig. 2 das Durchsuchen der Datenstruktur 50 in dem Schritt S300 fortgesetzt. Dies entspricht der Fortsetzung des 2. Falls des ersten spezifischen Knotens 1, bei welchem als das zweite Maximierungsergebnis Max2 ein zweiter bestimmter Wahrscheinlichkeitswert aus den Produkt-Wahrscheinlichkeitswerten, welcher nicht dem zu dem Sonderzeichen $ zugeordneten Produkt-Wahrscheinlichkeitswert entspricht, ermittelt wurde.

Dieses Fortsetzen weist die Schritte S350 und S351 auf. In dem Schritt S350 wird eine dritte Wahrscheinlichkeitsverteilung W3 der mehreren Wahrscheinlichkeitsverteilungen W1, W2, W3 durch Anwenden des trainierten neuronalen Netzes 30a auf die zweite spezifische Zeichenfolge babb erhalten.

Ferner wird in dem Schritt S350 ein drittes Maximierungsergebnis Max3 durch Anwenden einer dritten Maximierungsfunktion auf eine Anzahl N3 von Produkt-Wahrscheinlichkeitswerten zu den in der dritten Zeichenliste L3 verbleibenden Zeichen ermittelt.

Die Anzahl N3 entspricht der Anzahl der in der dritten Zeichenliste L3 verbleibenden Zeichen, wobei der dem Sonderzeichen $ zugeordnete Produkt-Wahrscheinlichkeitswert dem in der dritten Wahrscheinlichkeitsverteilung W3 ermittelten Wahrscheinlichkeitswert multipliziert mit Eins entspricht, und jeder einem anderen Zeichen als dem Sonderzeichen $ aus der dritten Zeichenliste L3 zugeordnete Produkt-Wahrscheinlichkeitswert durch Multiplikation des für dieses Zeichen erhaltenen Wahrscheinlichkeitswertes aus der dritten Wahrscheinlichkeitsverteilung W3 mit dem vorbestimmten Wahrscheinlichkeitswert p$ erhalten wird.

In dem Schritt S350 wird als das dritte Maximierungsergebnis Max3 derjenige Wahrscheinlichkeitswert aus der Anzahl N3 von Produkt-Wahrscheinlichkeitswerten ermittelt, welcher den höchsten Wert aufweist.

Anschließend wird in dem Schritt S351 ein dritter Variablenwert W3 durch Anwenden einer dritten Backtracking-Entscheidungs-Funktion auf einen ermittelten dritten Passwortwahrscheinlichkeitswert P(pnext3) ermittelt. Hierbei wird der dritte Passwortwahrscheinlichkeitswert P(pnext3) durch Multiplizieren des Wahrscheinlichkeitswertes des zweiten spezifischen Knotens 2 mit dem dritten Maximierungsergebnis Max3 ermittelt.

Analog zu dem Wurzelknoten ROOT und dem ersten spezifischen Knoten 1, werden in Abhängigkeit davon, ob der dritte Variablenwert W3 wahr oder falsch ist, nachfolgend unterschiedliche Schritte innerhalb und/oder ab dem zweiten spezifischen Knoten 2 durchgeführt. Diese unterschiedlichen Fälle werden zur besseren Übersicht in unterschiedliche Fälle 1 bis 3 unterteilt, welche jeweils mit einer "ODER"-Verknüpfung zusammenhängen:

1. Fall im zweiten spezifischen Knoten 2:

Wenn der dritte Variablenwert W3 wahr ist und wenn als das zweite Maximierungsergebnis Max3 der zu dem Sonderzeichen $ zugeordnete Produkt-Wahrscheinlichkeitswert ermittelt wird, wird der Schritt S352 durchgeführt. Dies kann auch als der 1. Fall im zweiten spezifischen Knoten 2 bezeichnet werden. Hierbei wird die zweite spezifische Zeichenfolge babb, welche durch den zweiten spezifischen Knoten 2 repräsentiert wird, als ein Passwort in die Passwortliste aufgenommen.

Dabei weist der Schritt S352 die folgenden Teilschritte auf:

Anhängen des Sonderzeichens $ an die zweite spezifische Zeichenfolge babb zum Erhalten der zweiten spezifischen Zeichenfolge babb als ein erstes oder ein weiteres Passwort PW3,
Entfernen des Sonderzeichens $ aus der dritten Zeichenliste L3, und
Hinzufügen des ersten oder des weiteren Passwortes PW3 zu der generierten Passwortliste G_PL und Erhöhen des Wertes des Passwortzählers um Eins.

Falls der Wert des Passwortzählers gleich der Anzahl M1 ist, wird das Durchführen der Tiefensuche gemäß Schritt S300 beendet und mit dem Schritt S400 fortgefahren.

2. Fall im zweiten spezifischen Knoten 2:

Wenn der dritte Variablenwert W3 wahr ist und wenn als das dritte Maximierungsergebnis Max3 ein dritter bestimmter Wahrscheinlichkeitswert aus den Produkt-Wahrscheinlichkeitswerten, welcher nicht dem zu dem Sonderzeichen $ zugeordneten Produkt-Wahrscheinlichkeitswert entspricht, ermittelt wird, werden die Schritte S353 bis S359 durchgeführt. Dies kann auch als der 2. Fall im zweiten spezifischen Knoten 2 bezeichnet werden. Hierbei wird an die zweite spezifische Zeichenfolge babb dasjenige Zeichen angehängt, welches dem dritten bestimmten Wahrscheinlichkeitswert zugeordnet ist, um eine dritte spezifische Zeichenfolge babbb, welche einem dritten spezifischen Knoten 3 zugeordnet ist, zu ermitteln. Anschließend wird in dem dritten spezifischen Knoten 3 in einer vierten Tiefe depth4 das Durchsuchen fortgesetzt.

Der Schritt S353 weist auf:
Anhängen eines dritten Zeichens f="b", welches dem dritten bestimmten Wahrscheinlichkeitswert zugeordnet ist, an die zweite spezifische Zeichenfolge babb zum Ermitteln einer dritten spezifischen Zeichenfolge babbb, welche einem dritten spezifischen Knoten 3 zugeordnet ist, welcher durch Anhängen des dritten Zeichens f an die zweite spezifische Zeichenfolge babb ermittelt wird.

Anschließend werden die Schritte S354 bis S359 durchgeführt:

Entfernen des dritten Zeichens f aus der dritten Zeichenliste L3 (Schritt S354),
Anlegen einer vierten Zeichenliste L4 für den dritten spezifischen Knoten 3, die zum Zeitpunkt des Anlegens genau die Zeichen des vorbestimmten Alphabets A umfasst (Schritt S355),
Festlegen des Wahrscheinlichkeitswertes für den dritten spezifischen Knoten 3 durch Multiplikation des Wahrscheinlichkeitswertes für den zweiten spezifischen Knoten 2 mit dem dritten Maximierungsergebnis Max3 (Schritt S356),
Festlegen des zweiten spezifischen Knotens 2 als einen dritten Rücksprungpunkt für den dritten spezifischen Knoten 3 zum Durchführen eines vierten Backtrackings (Schritt S357),
Festlegen des dritten spezifischen Knotens 3 als den aktuellen Knoten (Schritt S358), und
Fortsetzen des Durchsuchens der Datenstruktur 50 in dem Schritt S300 ab dem dritten spezifischen Knoten 3 (Schritt S359).

Ferner ist in der Fig. 2 eine dritte Kante 6 dargestellt, welche den zweiten spezifischen Knoten 2 und den dritten spezifischen Knoten 3 verbindet. Durch Anhängen des dritten Zeichens f="b", welches durch die dritte Kante 6 repräsentiert wird, ergibt sich die dritte spezifische Zeichenfolge babbb, welche durch den dritten spezifischen Knoten 3 repräsentiert wird.

3. Fall im zweiten spezifischen Knoten 2:

Wenn der dritte Variablenwert VV3 falsch ist, wird ein drittes Backtracking BT3 gemäß Schritt S360 durchgeführt. Dies kann auch als der 3. Fall im zweiten spezifischen Knoten 2 bezeichnet werden.

Der Schritt S360 weist auf:
Durchführen des dritten Backtrackings BT3, aufweisend:

Fortsetzen des Durchsuchens der Datenstruktur 50 in dem Schritt S300 ab dem für den zweiten spezifischen Knoten 2 festgelegten zweiten Rücksprungpunkt, aufweisend:
Wiederholtes Ausführen zumindest der Schritte S330 - S339.

Anschließend können die Schritte S330 - S339 in dem ersten spezifischen Knoten 1 erneut durchgeführt werden, jedoch mit einer reduzierten Zeichenliste L2 ohne das zweite Zeichen e="b". Dies kann dann dazu führen, dass das verbliebene Zeichen a, welches eine Kante von dem ersten spezifischen Knoten 1 zu einem zu dem zweiten spezifischen Knoten benachbarten Knoten 2a repräsentiert, die höchste Wahrscheinlichkeit aufweist und damit als (erneutes) zweites Maximierungsergebnis erhalten werden würde. Dann würde das Durchsuchen gemäß Schritt S300 analog in dem zu dem zweiten spezifischen Knoten benachbarten Knoten 2a mit der dann entstandenen Zeichenfolge "baba" fortgesetzt werden (siehe Fig. 2).

Nachfolgend wird anhand der Fig. 2 anhand von Beispielzahlen und Beispielstrings sowie einer unten aufgeführten Python-Implementierung detaillierter erläutert, wie ein Variablenwert, hier der dritte Variablenwert VV3, bestimmt wird. Anschließend wird erläutert, wie anhand des dritten Variablenwertes VV3 entschieden wird, ob ein Backtracking, hier als Beispiel das dritte Backtracking BT3, vorgenommen werden soll oder nicht.

Beispielhaft weist das vorbestimmte Alphabet A die Zeichen "a", "b" und "$" auf. Die vorbestimmte Anfangszeichenfolge sei z = "ba". Für das Beispiel wird angenommen, dass die jeweilige erhaltene Wahrscheinlichkeitsverteilung v(z, -), unabhängig von z, als Ergebnis stets ergibt, dass v(z, "a") = 0.25, v(z, "b") = 0.4 und v(z, "$") = 0.35 ist.

Ferner ist die Wahrscheinlichkeitsverteilung $F_i = y^{-1.2} + y^{-0.92}$, für alle i gegeben, was den Wahrscheinlichkeiten von 0.3/ 0.4/ 0.3 für "a"/ "b"/ "$" entspricht.

Die vorbestimmte Listengröße ist n = 6. Somit soll die generierte Passwortliste sechs Passwörter aufweisen. Es werden somit mittels des Durchsuchens der Datenstruktur 50 sechs Passwörter gesucht.

Fig. 2 zeigt die Baumstruktur unter anderem zu einem Zeitpunkt der Entscheidung, ob die Suche in dem zweiten spezifischen Knoten 2 durch Anhängen des dritten Zeichens f="b" an den aktuellen String, also die zweite Zeichenfolge "babb" fortgesetzt werden soll oder ob ein drittes Backtracking BT3 in den Vorgängerknoten (erster spezifischer Knoten 1) erfolgen soll. Das Anhängen des Sonderzeichens $, welches zum Passwort "babb" führt, wurde im zweiten spezifischen Knoten 2 bereits vorgenommen. Insgesamt wurden zu diesem Zeitpunkt bereits die drei Passwörter "ba", "bab", "babb" generiert. Dies bedeutet, dass die Anzahl R1 von noch für die Passwortliste zu generierenden Passwörtern beträgt: R1 = 6 (Anzahl der Soll-Passwörter) - 3 (bereits gefundene Passwörter) = 3. Damit müssen noch 3 Passwörter gefunden werden.

Die Ausgabe in Form einer Python-Implementierung für den betrachteten Schritt lautet (entspricht dem Anwenden der dritten Backtracking-Entscheidungs-Funktion) :

$$(1)\quad \text{P(pnext3) for x = 'b': 0.0192}$$

O(P(pnext3) = 0.0192): //Ermittlung eines Entscheidungswahrscheinlichkeitswertes O(P(pnext3))

Iterating over previous nodes:

$$i = 0 \qquad \text{// Tiefe 1 = Wurzelknoten ROOT}$$

$$(2)\quad h_1 = y^{-2.4} + 2 * y^{-2.12} + y^{-1.84} + y^{-1.2} + y^{-0.92} + y^{0.0}$$

$$(3)\quad \text{math.log(P(pnext3) / (Pz[0] * V[0]['a'] * p\$)) = -1.36}$$

$$(4)\quad \text{delta\_t for x = 'a': 3}$$

$$i = 1 \qquad \text{// Tiefe 2 = erster spezifischer Knoten 1}$$

$$(5)\quad h_2 = y^{-2.4} + 2 * y^{-2.12} + y^{-1.84} + y^{-1.2} + y^{-0.92} + y^{0.0}$$

$$(6)\quad \text{math.log(P(pnext3) / (Pz[1] * V[1]['a'] * p\$)) = -0.45}$$

$$(7)\quad \text{delta\_t for x = 'a': 1}$$

$$(8)\quad \text{T1 = 4, R1 = 3, returning False // Rückgabewert falsch}$$

Der Algorithmus berechnet also zunächst die Wahrscheinlichkeit für das nächste Passwort, dass sich durch Anhängen des dritten Zeichens f="b" und anschließend des Sonderzeichens $ ergeben würde. Diese Wahrscheinlichkeit ist gemäß obiger Gleichung (1)

$$\text{P(pnext3) = P("ba" + "bb") * v("ba"+ "bb", "b") * p\$ (vorbestimmter Wahrscheinlichkeitswert) = } 0.4^2 * 0.4 * 0.3 = 0.0192.$$

Nun muss geprüft werden, wie viele Passwörter mit einer mindestens genauso hohen Wahrscheinlichkeit aus den noch unbearbeiteten Kanten in den Vorgängerknoten (also die Kanten zum verbliebenen Zeichen a im Vorgängerknoten (mittlerer Knoten = erster spezifischer Knoten 1) und im Wurzelknoten ROOT) zu erwarten sind. Für den Wurzelknoten wird das Polynom $h_1$ anhand der Gleichung (2) (siehe oben)

$$h_1 = y^{-2.4} + 2 * y^{-2.12} + y^{-1.84} + y^{-1.2} + y^{-0.92} + y^{0.0}$$

herangezogen.

Das Polynom $h_1$ weist die drei Summanden $y^{-2.4} + 2*y^{-2.12} + y^{-1.84}$, $y^{-1.2} + y^{-0.92}$ und $y^{0.0}$ auf. Jeder der drei Summanden weist unterschiedliche Exponenten auf, beispielsweise "-2.4", "-1.2" oder "0.0" auf. Die Summanden des Polynoms $h_1$ werden wie folgt ermittelt, um dadurch das Polynom $h_1$ für die erste Tiefe depth1 zu ermitteln:

Jeder Exponent eines Monoms aus dem Polynom $h_1$ repräsentiert eine Wahrscheinlichkeit in logarithmierter Darstellung. Der erste Summand $y^{0.0}$ entspricht dem einen Passwort, dass sich in dem jeweiligen Knoten dadurch ergibt, dass direkt das Sonderzeichen gewählt wird (mit logarithmierter Wahrscheinlichkeit log(1.0)=0.0). Der zweite Summand $y^{-1.2} + y^{-0.92}$ ergibt sich wegen i = 1 durch Heranziehung der Wahrscheinlichkeitsverteilung $F_1$ für die zweite Tiefe depth2, die in diesem Fall 1 ergibt, somit ergibt sich der zweite Summand $y^{-1.2} + y^{-0.92}$. Der dritte Summand $y^{-2.4} + 2 * y^{-2.12} + y^{-1.84}$ ergibt sich wegen i = 2 durch Multiplikation der Wahrscheinlichkeitsverteilung $F_1$ für die zweite Tiefe mit der Wahrscheinlichkeitsverteilung $F_2$ für die dritte Tiefe depth3. Damit ist der dritte Summand gleich $(y^{-1.2} + y^{-0.92})* (y^{-1.2} + y^{-0.92})$, was der binomischen Formel $(a + b)^2 = a^2 + 2ab + b^2$ entspricht. Damit ergibt sich der dritte Summand $y^{-2.4} + 2 * y^{-2.12} + y^{-1.84}$. Das gleiche gilt in analoger Weise für die Berechnung des Polynoms $h_2$ weiter unten.

Unter Berücksichtigung der Wahrscheinlichkeiten P("ba") = 1.0 (also der Wahrscheinlichkeit des Wurzelknotens ROOT), v("ba", "a") = 0.25 und p\$ = 0.3, die für den Vergleich zu P(pnext3) noch mit den (exponentierten) Exponenten von $h_1$ multipliziert werden müssten, ergibt sich, dass alle Monome in $h_1$ zu zählen sind (mit Vielfachheit ihrer Koeffizienten), deren Exponent mindestens math.log(0.0192/[1.0 * 0.25 * 0.3]) = -1.36 beträgt (siehe oben, Gleichung (3)). Hiervon gibt es drei, nämlich $y^{-2.4}$, $2*y^{-2.12}$ und $y^{-1.84}$. Somit ergibt sich, dass in einer Kante, die das verbliebene Zeichen a repräsentiert, die von dem Wurzelknoten ROOT hinwegführt, es noch 3 mögliche Passwörter mit mindestens einer so hohen Wahrscheinlichkeit wie P(pnext3) gibt (siehe oben, Gleichung (4)).

Für den mittleren Knoten (also den ersten spezifischen Knoten 1) ergibt sich das (wegen "$F_i$ unabhängig von i" zu $h_1$ identische) Polynom $h_2$ anhand der Gleichung (5) (siehe oben)

$$h_2 = y^{-2.4} + 2 * y^{-2.12} + y^{-1.84} + y^{-1.2} + y^{-0.92} + y^{0.0}$$

und als Mindestexponent für die Monome der Wert log(0.0192/[0.4 * 0.25 * 0.3]) = -0.45 (siehe oben, Gleichung (6)). Hierzu gibt es in $h_2$ ein passendes Monom (siehe oben, Gleichung (7)).

Damit ergibt sich für die Anzahl T1 von möglichen Passwörtern: 3 + 1 = 4. R1 = 3. Da T1 > R1 ist, entscheidet sich das computer-implementierte Verfahren in Schritt S300 für das dritte Backtracking BT3, da es aussichtsreicher ist, in Kanten des ersten spezifischen Knotens 1 oder des Wurzelknotens ROOT nach weiteren Passwörtern zu suchen, anstatt das dritte Zeichen f="b" an den zweiten spezifischen Knoten 2 anzuhängen. Somit ist der dritte Variablenwert VV3 falsch oder hat den Rückgabewert "falsch" (siehe oben, Gleichung (8)). Das dritte Backtracking BT3 an sich geht anschließend zu dem ersten spezifischen Knoten 1 zurück.

Somit weist das Anwenden der dritten Backtracking-Entscheidungs-Funktion ein Ermitteln eines oder mehrerer Entscheidungswahrscheinlichkeitswerte O(P(pnext3)) in Abhängigkeit zumindest einer mathematischen Logarithmierungsfunktion auf (siehe oben, Gleichungen (1) bis (8), insbesondere die Gleichungen (3) und (6)), wobei jeder der einen oder mehreren ermittelten Entscheidungswahrscheinlichkeitswerte (O(P(pnext3))) zu je einem in einer Zeichenliste eines Knotens oberhalb des zweiten spezifischen Knotens 2 verbliebenen Zeichens a gehört, wobei der Knoten dem Wurzelknoten ROOT oder dem ersten spezifischen Knoten 1 entspricht, wobei die Zeichenliste der ersten Zeichenliste L1 oder der zweiten Zeichenliste L2 entspricht.

Wie in den Gleichungen (3) und (6) dargestellt, erhält die jeweilige mathematische Logarithmierungsfunktion als Eingangsparameter zumindest den dritten Passwortwahrscheinlichkeitswert P(pnext3), den vom trainierten neuronalen Netz 30a ermittelten Wahrscheinlichkeitswert für das in der Zeichenliste des Knotens oberhalb des zweiten spezifischen Knotens 2 verbliebene Zeichen a, den Wahrscheinlichkeitswert des Knotens (siehe Gleichung (3), Pz[0] oder Gleichung (6), Pz[1]) und den vorbestimmten Wahrscheinlichkeitswert p\$.

Dabei werden durch Anwenden eines Logarithmus durch die jeweilige mathematische Logarithmierungsfunktion auf den Quotienten aus dem dritten Passwortwahrscheinlichkeitswert P(pnext3) und dem Produkt aus dem Wahrscheinlichkeitswert des Knotens, dem vom trainierten neuronalen Netz 30a ermittelten Wahrscheinlichkeitswert für das in der Zeichenliste des Knotens oberhalb des zweiten spezifischen Knotens 2 verbliebene Zeichen a und dem vorbestimmten Wahrscheinlichkeitswert p\$, der eine oder mehrere Entscheidungswahrscheinlichkeitswerte O(P(pnext3)) ermittelt (siehe oben, Gleichungen (3) und (6)).

Hierbei wird jeder der einen oder mehreren ermittelten Entscheidungswahrscheinlichkeitswerte O(P(pnext3)) mit Exponenten eines ermittelten Polynoms (siehe oben, Gleichung (2) oder (5)) für den zur Zeichenliste gehörenden Knoten verglichen, um eine Anzahl T1 von möglichen Passwörtern (siehe oben, Gleichung (4) oder (7)), welche in einem oder mehreren Knoten oberhalb des zweiten spezifischen Knotens 2 vorhanden sind, zu erhalten.

Anschließend wird der dritte Variablenwert VV3 durch Vergleichen der erhaltenen Anzahl T1 von möglichen Passwörtern mit der Anzahl R1 von noch für die Passwortliste zu generierenden Passwörtern bestimmt (siehe oben, Gleichung (8)), wobei die Anzahl R1 von noch für die Passwortliste zu generierenden Passwörtern in Abhängigkeit des Wertes des Passwortzählers bestimmt wird.

Fig. 3 zeigt ein schematisches Blockdiagramm eines Kommunikationssystems 100 zum Identifizieren von Sicherheitslücken in einer Entität 20, wobei das Kommunikationssystem 100 eine Prüf-Vorrichtung 40 und die Entität 20 aufweist. Die Prüfvorrichtung 40 in Fig. 3 weist eine Empfangs-Einheit 41, eine Erhaltungs-Einheit 42, eine Durchsuchungs-Einheit 43 und eine Prüfeinheit 44 auf.

Die Empfangs-Einheit 41 in Fig. 3 ist zum Empfangen eines trainierten neuronalen Netzes 30a eingerichtet.

Ferner ist die Erhaltungs-Einheit 42 zum Erhalten einer oder mehrerer Wahrscheinlichkeitsverteilungen W1, W2, W3 (siehe Fig. 2) über ein vorbestimmtes Alphabet A (siehe Fig. 2) in Abhängigkeit einer vorbestimmten Anfangszeichenfolge z (siehe Fig. 2) und/oder in Abhängigkeit zumindest einer spezifischen Zeichenfolge bab aus mehreren spezifischen Zeichenfolgen bab, babb, babbb (siehe Fig. 2) durch Anwenden des trainierten neuronalen Netzes 30a auf die vorbestimmte Anfangszeichenfolge z oder eine der mehreren spezifischen Zeichenfolgen bab, babb, babbb (siehe Fig. 2) eingerichtet. Durch die eine oder mehreren erhaltenen Wahrscheinlichkeitsverteilungen W1, W2, W3 wird jeweils jedem Zeichen aus dem vorbestimmten Alphabet A ein jeweiliger Wahrscheinlichkeitswert zugeordnet.

Weiterhin ist die Durchsuchungs-Einheit 43 zum Durchführen einer Tiefensuche in einer Datenstruktur 50 (siehe Fig. 2), insbesondere in einer Baumstruktur, mittels Durchsuchen der Datenstruktur 50 in Abhängigkeit der einen oder mehreren erhaltenen Wahrscheinlichkeitsverteilungen W1, W2, W3 und des vorbestimmten Alphabets A zum Generieren einer Passwortliste G_PL (siehe auch Fig. 2) einer vorbestimmten Listengröße aufweisend eine Anzahl von Passwörtern eingerichtet.

Anschließend ist die Prüfeinheit 44 dazu eingerichtet, Sicherheitslücken in der Entität 20 mittels der Anzahl von Passwörtern der generierten Passwortliste G_PL zu identifizieren.

Obwohl die vorliegende Erfindung anhand von Ausführungsbeispielen beschrieben wurde, ist sie vielfältig modifizierbar.

Bezugszeichenliste

| 1 | erster spezifischer Knoten |
|---|---|
| 1a | zu dem ersten spezifischen Knoten benachbarter Knoten |
| 2 | zweiter spezifischer Knoten |
| 2a | zu dem zweiten spezifischen Knoten benachbarter Knoten |
| 3 | dritter spezifischer Knoten |
| 4 | erste Kante |
| 5 | zweite Kante |
| 6 | dritte Kante |
| 20 | Entität |
| 30 | neuronales Netz |
| 30a | trainiertes neuronales Netz |
| 40 | Prüf-Vorrichtung |
| 41 | Empfangs-Einheit |
| 42 | Erhaltungs-Einheit |
| 43 | Durchsuchungs-Einheit |
| 44 | Prüfeinheit |
| 50 | Datenstruktur |
| 100 | Kommunikationssystem |
| $ | Sonderzeichen |
| A | vorbestimmtes Alphabet |
| a | verbliebenes Zeichen |
| bab | erste spezifische Zeichenfolge |
| babb | zweite spezifische Zeichenfolge |
| babbb | dritte spezifische Zeichenfolge |
| BT1 | erstes Backtracking |
| BT2 | zweites Backtracking |
| BT3 | drittes Backtracking |
| d | erstes Zeichen |
| depth1 | erste Tiefe |
| depth2 | zweite Tiefe |
| depth3 | dritte Tiefe |
| depth4 | vierte Tiefe |
| e | zweites Zeichen |
| f | drittes Zeichen |
| G_PL | generierte Passwortliste |
| L1 | erste Zeichenliste |
| L2 | zweite Zeichenliste |
| L3 | dritte Zeichenliste |
| L4 | vierte Zeichenliste |
| Max1 | erstes Maximierungsergebnis |
| Max2 | zweites Maximierungsergebnis |
| Max3 | drittes Maximierungsergebnis |
| O(P(pnext3)) | Entscheidungswahrscheinlichkeitswert |

| | |
|---|---|
| p$ | vorbestimmter Wahrscheinlichkeitswert |
| P(pnext1) | erster Passwortwahrscheinlichkeitswert |
| P(pnext2) | zweiter Passwortwahrscheinlichkeitswert |
| P(pnext3) | dritter Passwortwahrscheinlichkeitswert |
| PL | vorhandene Passwortliste |
| PW1 | erstes Passwort |
| PW2 | zweites Passwort |
| PW3 | drittes Passwort |
| R1 | Anzahl |
| ROOT | Wurzelknoten |
| S100 - S400 | Verfahrensschritte |
| S301 | Verfahrensschritt |
| S310 - S319 | Verfahrensschritte |
| S330 - S340 | Verfahrensschritte |
| S350 - S360 | Verfahrensschritte |
| T1 | Anzahl |
| $v(z, -)$ | Wahrscheinlichkeitsverteilung |
| VV1 | erster Variablenwert |
| VV2 | zweiter Variablenwert |
| VV3 | dritter Variablenwert |
| W1 | erste Wahrscheinlichkeitsverteilung |
| W2 | zweite Wahrscheinlichkeitsverteilung |
| W3 | dritte Wahrscheinlichkeitsverteilung |
| z | vorbestimmte Anfangszeichenfolge |

Anhang:

<u>Legende</u>

```
R1=n        #Zahl noch zu generierender Passwörter
G_PL=[]     #inkrementell zu füllende Passwortliste
V=[]        #Stack für die v(z,-) der Knoten im aktuellen Such-pfad
C=[]        #Stack für die bereits untersuchten Zeichen der Knoten im aktuellen Suchpfad
Pz=[]       #Stack für die Pz der einzelnen Knoten
```

<u>Pseudocode</u>

def depth_first_search(z, i): #z: aktueller Anfangsstring; i: aktuelle Tiefe im Baum

```
    Pz.append(P(z))
    v(z, -)=NN(z)
    V.append(v(z, -)) #V ist Liste, in der die v(z, -) zu Knoten des aktuellen Pfades liegen
    C. append([ ]) #C[i] enthält die Zeichen, die im i-ten Knoten schon ausprobiert wurden
    X=A
    while X<>Ø: # wurden noch nicht alle Zeichen aus A in diesem Knoten ausprobiert?
```

```
    if R1==0: #keine Passwörter mehr zu generieren
        return
    x=max([x for x in X if x!='$'],key=V[i].get)
    if '$' in X and v['$'] ≥ v[x]·p$:
        x='$'
        Pp_next=Pz[i]·v['$']
    else:
        Pp_next=Pz[i]·v[x]*p$
    X.remove(x)
    if O(V, C, R1, Pp_next)==False: #Backtracking-
Entscheidungs-Funktion "O" entscheidet sich für Backtracking
break
    C[i].append(x)
    if x=='$': #Passwort abgeschlossen

        G_PL.append(z)
        R1-=1
    else:
        depth_first_search(z+x, i+1) # "+" steht für An-
hängen des Zeichens x an z
    V.pop()
    C.pop()
    Pz.pop()
depth_first_search("",0)
```

Quellenverzeichnis:

[1] https://github.com/danielmiessler/SecLists/tree/ master/Passwords/Common-Credentials

[2] https://www.openwall.com/john/

[3] https://hashcat.net/hashcat/

[4] https://de.wikipedia.org/wiki/K%C3%BCnstliches_ neuronales_Netz

[5] https://towardsdatascience.com/the-mostly-complete-chart-of-neural-networks-explained-3fb6f2367464

[6] https://de.wikipedia.org/wiki/Long_short-term_memory

[7] https://en.wikipedia.org/wiki/Gated_recurrent_unit

[8] Melicher, Ur, Segreti, Komanduri, Bauer, Christin, Cranor: Fast, Lean, and Accurate: Modeling Password Guessability Using Neural Networks, 25th USENIX Security Symposium, 2016 (www.usenix.org/system/files/conference/usenixsecur ity16/sec16_paper_melicher.pdf)

[9] Hitaj, Gasti, Ateniese, Perez-Cruz: PassGAN: A Deep Learning Approach for Password Guessing, 2017 (https://arxiv.org/abs/1709.00440)

**Patentansprüche**

1. Computer-implementiertes Verfahren zum Identifizieren von Sicherheitslücken in einer Entität (20) in einem Kommunikationssystem (100) mittels einer generierten Passwortliste (G_PL), mit den Schritten:

   a) Empfangen (S100) eines trainierten neuronalen Netzes (30a),
   b) Erhalten (S200) einer oder mehrerer Wahrscheinlichkeitsverteilungen (W1, W2, W3) über ein vorbestimmtes Alphabet (A) in Abhängigkeit einer vorbestimmten Anfangszeichenfolge (z) und/oder in Abhängigkeit zumindest einer spezifischen Zeichenfolge (bab) aus mehreren spezifischen Zeichenfolgen (bab, babb, babbb) durch Anwenden des trainierten neuronalen Netzes (30a) auf die vorbestimmte Anfangszeichenfolge (z) oder eine der mehreren spezifischen Zeichenfolgen (bab, babb, babbb), wobei durch die eine oder mehreren erhaltenen Wahrscheinlichkeitsverteilungen (W1, W2, W3) jeweils jedem Zeichen aus dem vorbestimmten Alphabet (A) ein jeweiliger Wahrscheinlichkeitswert zugeordnet wird,
   c) Durchführen (S300) einer Tiefensuche in einer Datenstruktur (50), insbesondere in einer Baumstruktur, mittels Durchsuchen der Datenstruktur (50) in Abhängigkeit der einen oder mehreren erhaltenen Wahrscheinlichkeitsverteilungen (W1, W2, W3) und des vorbestimmten Alphabets (A) zum Generieren der Passwortliste (G_PL) einer vorbestimmten Listengröße aufweisend eine Anzahl von Passwörtern, und
   d) Identifizieren (S400) von Sicherheitslücken in der Entität (20) mittels der Anzahl von Passwörtern der generierten Passwortliste (G_PL).

2. Verfahren nach Anspruch 1,
   **dadurch gekennzeichnet,**
   **dass** die Datenstruktur (50) zumindest einen Wurzelknoten (ROOT) aufweist, wobei der Wurzelknoten (ROOT) die vorbestimmte Anfangszeichenfolge (z) mit dem Wahrscheinlichkeitswert Eins repräsentiert, wobei das vorbestimmte Alphabet (A) ein Sonderzeichen ($) aufweist, wobei eine erste Wahrscheinlichkeitsverteilung (W1) der mehreren Wahrscheinlichkeitsverteilungen (W1, W2, W3) durch Anwenden des trainierten neuronalen Netzes (30a) auf die vorbestimmte Anfangszeichenfolge (z) erhalten wird, wobei durch die erhaltene erste Wahrscheinlichkeitsverteilung (W1) dem Sonderzeichen ($) ein Wahrscheinlichkeitswert zugeordnet wird, wobei der Wurzelknoten (ROOT) in einer ersten Tiefe (depth1) der Datenstruktur (50) angeordnet ist, wobei das Durchsuchen der Datenstruktur (50) in dem Schritt c) (S300) aufweist:

   Festlegen der vorbestimmten Listengröße, wobei die vorbestimmte Listengröße eine Anzahl M1 von zu generierenden Passwörtern aufweist,
   Generieren einer leeren Passwortliste (G_PL),
   Initialisieren eines Passwortzählers mit dem Wert Null,
   Festlegen des Wurzelknotens (ROOT) als den aktuellen Knoten,
   Anlegen einer ersten Zeichenliste (L1) für den Wurzelknoten (ROOT), die zum Zeitpunkt des Anlegens genau die Zeichen des vorbestimmten Alphabets (A) umfasst, und
   Ausführen eines Passwortschemas zum Generieren zumindest eines Passwortes, wobei das Ausführen des Passwortschemas die folgenden Schritte aufweist:

   c100) Ermitteln (S301) eines ersten Maximierungsergebnisses (Max1) durch Anwenden einer ersten Maximierungsfunktion auf eine Anzahl N1 von Produkt-Wahrscheinlichkeitswerten zu den in der ersten Zeichenliste (L1) verbleibenden Zeichen, wobei die Anzahl N1 der Anzahl der in der ersten Zeichenliste (L1) verbleibenden Zeichen entspricht, wobei der dem Sonderzeichen ($) zugeordnete Produkt-Wahrscheinlichkeitswert dem vom trainierten neuronalen Netz (30a) ermittelten Wahrscheinlichkeitswert multipliziert mit Eins entspricht, und jeder einem anderen Zeichen als dem Sonderzeichen ($) aus der ersten Zeichenliste (L1) zugeordnete Produkt-Wahrscheinlichkeitswert durch Multiplikation des für dieses Zeichen erhaltenen Wahrscheinlichkeitswertes aus der ersten Wahrscheinlichkeitsverteilung (W1) mit einem vorbestimmten Wahrscheinlichkeitswert (p$) erhalten wird, wobei als das erste Maximierungsergebnis (Max1) derjenige Wahrscheinlichkeitswert aus der Anzahl N1 von Produkt-Wahrscheinlichkeitswerten ermittelt wird, welcher den höchsten Wert aufweist,

c110) Bestimmen (S310) eines ersten Variablenwertes (VV1) durch Anwenden einer ersten Backtracking-Entscheidungs-Funktion auf einen ermittelten ersten Passwortwahrscheinlichkeitswert (P(pnext1)), wobei der erste Passwortwahrscheinlichkeitswert (P(pnext1)) zumindest in Abhängigkeit des ersten Maximierungsergebnisses (Max1) ermittelt wird, wobei

wenn zumindest der erste Variablenwert (VV1) wahr ist und

c111) wenn als das erste Maximierungsergebnis (Max1) der zu dem Sonderzeichen ($) zugeordnete Produkt-Wahrscheinlichkeitswert ermittelt wird,

Anhängen (S311) des Sonderzeichens ($) an die vorbestimmte Anfangszeichenfolge (z) zum Erhalten der vorbestimmten Anfangszeichenfolge (z) als ein erstes oder ein weiteres Passwort (PW1),

Entfernen (S311) des Sonderzeichens ($) aus der ersten Zeichenliste (L1), und

Hinzufügen (S311) des ersten oder des weiteren Passwortes (PW1) zu der generierten Passwortliste (G_PL) und Erhöhen des Wertes des Passwortzählers um Eins,

wobei wenn der Wert des Passwortzählers gleich der Anzahl M1 ist,

Beenden des Durchführens (S300) der Tiefensuche und Fortfahren mit Schritt d) (S400), oder

wenn als das erste Maximierungsergebnis (Max1) ein erster bestimmter Wahrscheinlichkeitswert aus den Produkt-Wahrscheinlichkeitswerten, welcher nicht dem zu dem Sonderzeichen ($) zugeordneten Produkt-Wahrscheinlichkeitswert entspricht, ermittelt wird,

c112) Anhängen (S312) eines ersten Zeichens (d), welches dem ersten bestimmten Wahrscheinlichkeitswert zugeordnet ist, an die vorbestimmte Anfangszeichenfolge (z) zum Ermitteln einer ersten spezifischen Zeichenfolge (bab), welche einem ersten spezifischen Knoten (1) zugeordnet ist, welcher durch Anhängen des ersten Zeichens (d) an die vorbestimmte Anfangszeichenfolge (z) ermittelt wird,

c113) Entfernen (S313) des ersten Zeichens (d) aus der ersten Zeichenliste (L1),

c114) Anlegen (S314) einer zweiten Zeichenliste (L2) für den ersten spezifischen Knoten (1), die zum Zeitpunkt des Anlegens genau die Zeichen des vorbestimmten Alphabets (A) umfasst,

c115) Festlegen (S315) des Wahrscheinlichkeitswertes für den ersten spezifischen Knoten (1) durch Multiplikation des Wahrscheinlichkeitswertes des Wurzelknotens (ROOT) mit dem ersten Maximierungsergebnis (Max1),

c116) Festlegen (S316) des Wurzelknotens (ROOT) als einen ersten Rücksprungpunkt für den ersten spezifischen Knoten (1) zum Durchführen des zweiten Backtrackings (BT2),

c117) Festlegen (S317) des ersten spezifischen Knotens (1) als den aktuellen Knoten, und

c118) Fortsetzen (S318) des Durchsuchens der Datenstruktur (50) in dem Schritt c) (S300) ab dem ersten spezifischen Knoten (1), oder

c119) wenn der erste Variablenwert (VV1) falsch ist, Durchführen (S319) eines ersten Backtrackings (BT1), wobei bei dem Durchführen (S319) des ersten Backtrackings (BT1) das Durchführen (S300) der Tiefensuche abgebrochen wird.

3. Verfahren nach Anspruch 2,
**dadurch gekennzeichnet,**
**dass** der erste Passwortwahrscheinlichkeitswert (P(pnext1)) durch Multiplizieren des Wahrscheinlichkeitswertes für den Wurzelknoten mit dem ersten Maximierungsergebnis (Max1) ermittelt wird.

4. Verfahren nach Anspruch 2 oder 3,
**dadurch gekennzeichnet,**
**dass** der erste Variablenwert (VV1) durch Anwenden der ersten Backtracking-Entscheidungs-Funktion auf den ermittelten ersten Passwortwahrscheinlichkeitswert (P(pnext1)), auf einen Zustand des Wurzelknotens (ROOT) und auf eine Anzahl (R1) von noch für die Passwortliste zu generierenden Passwörtern bestimmt wird.

5. Verfahren nach einem der Ansprüche 2 - 4,
**dadurch gekennzeichnet,**
**dass** das Fortsetzen des Durchsuchens der Datenstruktur (50) in dem Schritt c) (S300) ab dem ersten spezifischen Knoten (1) aufweist:

c200) Erhalten (S330) einer zweiten Wahrscheinlichkeitsverteilung (W2) der mehreren Wahrscheinlichkeitsverteilungen (W1, W2, W3) durch Anwenden des trainierten neuronalen Netzes (30a) auf die erste spezifische Zeichenfolge (bab),

Ermitteln (S330) eines zweiten Maximierungsergebnisses (Max2) durch Anwenden einer zweiten Maximierungsfunktion auf eine Anzahl N2 von Produkt-Wahrscheinlichkeitswerten zu den in der zweiten Zeichenliste (L2) verbleibenden Zeichen, wobei die Anzahl N2 der Anzahl der in der zweiten Zeichenliste (L2) verbleibenden Zeichen entspricht, wobei der dem Sonderzeichen ($) zugeordnete Produkt-Wahrscheinlichkeits-wert dem in der zweiten Wahrscheinlichkeitsverteilung (W2) ermittelten Wahrscheinlichkeitswert multipliziert mit Eins entspricht, und jeder einem anderen Zeichen als dem Sonderzeichen ($) aus der zweiten Zeichenliste (L2) zugeordnete Produkt-Wahrscheinlichkeitswert durch Multiplikation des für dieses Zeichen erhaltenen Wahrscheinlichkeitswertes aus der zweiten Wahrscheinlichkeitsverteilung (W2) mit dem vorbestimmten Wahrscheinlichkeitswert (p $) erhalten wird, wobei als das zweite Maximierungsergebnis (Max2) derjenige Wahrscheinlichkeitswert aus der Anzahl N2 von Produkt-Wahrscheinlichkeitswerten ermittelt wird, welcher den höchsten Wert aufweist,

c210) Bestimmen (S331) eines zweiten Variablenwertes (W2) durch Anwenden einer zweiten Backtracking-Entscheidungs-Funktion auf einen ermittelten zweiten Passwortwahrscheinlichkeitswert (P(pnext2)), wobei der zweite Passwortwahrscheinlichkeitswert (P(pnext2)) zumindest in Abhängigkeit des zweiten Maximierungsergebnisses (Max2) ermittelt wird, wobei

wenn zumindest der zweite Variablenwert (VV2) wahr ist und

c211) wenn als das zweite Maximierungsergebnis (Max2) der zu dem Sonderzeichen ($) zugeordnete Produkt-Wahrscheinlichkeitswert ermittelt wird,

> Anhängen (S332) des Sonderzeichens ($) an die erste spezifische Zeichenfolge (bab) zum Erhalten der ersten spezifischen Zeichenfolge (bab) als ein erstes oder ein weiteres Passwort (PW2),
> Entfernen (S332) des Sonderzeichens ($) aus der zweiten Zeichenliste (L2), und
> Hinzufügen (S332) des ersten oder des weiteren Passwortes (PW2) zu der generierten Passwortliste (G_PL) und Erhöhen des Wertes des Passwortzählers um Eins,
> wobei wenn der Wert des Passwortzählers gleich der Anzahl M1 ist,
> Beenden des Durchführens (S300) der Tiefensuche und Fortfahren mit Schritt d) (S400), oder

wenn als das zweite Maximierungsergebnis (Max2) ein zweiter bestimmter Wahrscheinlichkeitswert aus den Produkt-Wahrscheinlichkeitswerten, welcher nicht dem zu dem Sonderzeichen ($) zugeordneten Produkt-Wahrscheinlichkeitswert entspricht, ermittelt wird,

c212) Anhängen (S333) eines zweiten Zeichens (e), welches dem zweiten bestimmten Wahrscheinlichkeitswert zugeordnet ist, an die erste spezifische Zeichenfolge (bab) zum Ermitteln einer zweiten spezifischen Zeichenfolge (babb), welche einem zweiten spezifischen Knoten (2) zugeordnet ist, welcher durch Anhängen des zweiten Zeichens (e) an die erste spezifische Zeichenfolge (bab) ermittelt wird,

c213) Entfernen (S334) des zweiten Zeichens (e) aus der zweiten Zeichenliste (L2),

c214) Anlegen (S335) einer dritten Zeichenliste (L3) für den zweiten spezifischen Knoten (2), die zum Zeitpunkt des Anlegens genau die Zeichen des vorbestimmten Alphabets (A) umfasst,

c215) Festlegen (S336) des Wahrscheinlichkeitswertes für den zweiten spezifischen Knoten (2) durch Multiplikation des Wahrscheinlichkeitswertes für den ersten spezifischen Knoten (1) mit dem zweiten Maximierungsergebnis (Max2),

c216) Festlegen (S337) des ersten spezifischen Knotens (1) als einen zweiten Rücksprungpunkt für den zweiten spezifischen Knoten (2) zum Durchführen eines dritten Backtrackings (BT3),

c217) Festlegen (S338) des zweiten spezifischen Knotens (2) als den aktuellen Knoten, und

c218) Fortsetzen (S339) des Durchsuchens der Datenstruktur (50) in dem Schritt c) (S300) ab dem zweiten spezifischen Knoten (2), oder

c219) wenn der zweite Variablenwert (VV2) falsch ist,

Durchführen (S340) eines zweiten Backtrackings (BT2), aufweisend:
Fortsetzen des Durchsuchens der Datenstruktur (50) in dem Schritt c) (S300) ab dem ersten Rücksprungpunkt, aufweisend:
Wiederholtes Ausführen der Schritte c100) - c118) (S301 - S318) .

6. Verfahren nach Anspruch 5,
   **dadurch gekennzeichnet,**
   **dass** der zweite Passwortwahrscheinlichkeitswert (P(pnext2)) durch Multiplizieren des Wahrscheinlichkeitswertes des ersten spezifischen Knotens (1) mit dem zweiten Maximierungsergebnis (Max2) ermittelt wird.

7. Verfahren nach Anspruch 5 oder 6,
   **dadurch gekennzeichnet,**
   **dass** der zweite Variablenwert (VV2) durch Anwenden der zweiten Backtracking-Entscheidungs-Funktion auf den ermittelten zweiten Passwortwahrscheinlichkeitswert (P(pnext2)), auf einen jeweiligen Zustand aller jeweiligen Knoten von dem Wurzelknoten (ROOT) bis zu dem ersten spezifischen Knoten (1) und auf die Anzahl (R1) von noch für die Passwortliste zu generierenden Passwörtern bestimmt wird.

8. Verfahren nach einem der Ansprüche 5 - 7,
**dadurch gekennzeichnet,**
**dass** das Fortsetzen des Durchsuchens der Datenstruktur (50) in dem Schritt c) (S300) ab dem zweiten spezifischen Knoten (2) aufweist:

c300) Erhalten (S350) einer dritten Wahrscheinlichkeitsverteilung (W3) der mehreren Wahrscheinlichkeitsverteilungen (W1, W2, W3) durch Anwenden des trainierten neuronalen Netzes (30a) auf die zweite spezifische Zeichenfolge (babb),
Ermitteln (S350) eines dritten Maximierungsergebnisses (Max3) durch Anwenden einer dritten Maximierungsfunktion auf eine Anzahl N3 von Produkt-Wahrscheinlichkeitswerten zu den in der dritten Zeichenliste (L3) verbleibenden Zeichen, wobei die Anzahl N3 der Anzahl der in der dritten Zeichenliste (L3) verbleibenden Zeichen entspricht, wobei der dem Sonderzeichen ($) zugeordnete Produkt-Wahrscheinlichkeits-wert dem in der dritten Wahrscheinlichkeitsverteilung (W3) ermittelten Wahrscheinlichkeitswert multipliziert mit Eins entspricht, und jeder einem anderen Zeichen als dem Sonderzeichen ($) aus der dritten Zeichenliste (L3) zugeordnete Produkt-Wahrscheinlichkeitswert durch Multiplikation des für dieses Zeichen erhaltenen Wahrscheinlichkeitswertes aus der dritten Wahrscheinlichkeitsverteilung (W3) mit dem vorbestimmten Wahrscheinlichkeitswert (p$) erhalten wird, wobei als das dritte Maximierungsergebnis (Max3) derjenige Wahrscheinlichkeitswert aus der Anzahl N3 von Produkt-Wahrscheinlichkeitswerten ermittelt wird, welcher den höchsten Wert aufweist,
c310) Bestimmen (S351) eines dritten Variablenwertes (W3) durch Anwenden einer dritten Backtracking-Entscheidungs-Funktion auf einen ermittelten dritten Passwortwahrscheinlichkeitswert (P(pnext3)), wobei der dritte Passwortwahrscheinlichkeitswert (P(pnext3)) zumindest in Abhängigkeit des dritten Maximierungsergebnisses (Max3) ermittelt wird, wobei
wenn zumindest der dritte Variablenwert (VV3) wahr ist und
c311) wenn als das dritte Maximierungsergebnis (Max3) der zu dem Sonderzeichen ($) zugeordnete Produkt-Wahrscheinlichkeitswert ermittelt wird,

Anhängen (S352) des Sonderzeichens ($) an die zweite spezifische Zeichenfolge (babb) zum Erhalten der zweiten spezifischen Zeichenfolge (babb) als ein erstes oder ein weiteres Passwort (PW3),
Entfernen (S352) des Sonderzeichens ($) aus der dritten Zeichenliste (L3), und
Hinzufügen (S352) des ersten oder des weiteren Passwortes (PW3) zu der generierten Passwortliste (G_PL) und Erhöhen des Wertes des Passwortzählers um Eins,
wobei wenn der Wert des Passwortzählers gleich der Anzahl M1 ist,
Beenden des Durchführens (S300) der Tiefensuche und Fortfahren mit Schritt d) (S400), oder

wenn als das dritte Maximierungsergebnis (Max3) ein dritter bestimmter Wahrscheinlichkeitswert aus den Produkt-Wahrscheinlichkeitswerten, welcher nicht dem zu dem Sonderzeichen ($) zugeordneten Produkt-Wahrscheinlichkeitswert entspricht, ermittelt wird,
c312) Anhängen (S353) eines dritten Zeichens (f), welches dem dritten bestimmten Wahrscheinlichkeitswert zugeordnet ist, an die zweite spezifische Zeichenfolge (babb) zum Ermitteln einer dritten spezifischen Zeichenfolge (babbb), welche einem dritten spezifischen Knoten (3) zugeordnet ist, welcher durch Anhängen des dritten Zeichens (f) an die zweite spezifische Zeichenfolge (babb) ermittelt wird,
c313) Entfernen (S354) des dritten Zeichens (f) aus der dritten Zeichenliste (L3),
c314) Anlegen (S355) einer vierten Zeichenliste (L4) für den dritten spezifischen Knoten (3), die zum Zeitpunkt des Anlegens genau die Zeichen des vorbestimmten Alphabets (A) umfasst,
c315) Festlegen (S356) des Wahrscheinlichkeitswertes für den dritten spezifischen Knoten (3) durch Multiplikation des Wahrscheinlichkeitswertes für den zweiten spezifischen Knoten (2) mit dem dritten Maximierungsergebnis (Max3),
c316) Festlegen (S357) des zweiten spezifischen Knotens (2) als einen dritten Rücksprungpunkt für den dritten spezifischen Knoten (3) zum Durchführen eines vierten Backtrackings,
c317) Festlegen (S358) des dritten spezifischen Knotens (3) als den aktuellen Knoten, und
c318) Fortsetzen (S359) des Durchsuchens der Datenstruktur (50) in dem Schritt c) (S300) ab dem dritten spezifischen Knoten (3), oder
c319) wenn der dritte Variablenwert (VV3) falsch ist,

Durchführen (S360) des dritten Backtrackings (BT3), aufweisend:

Fortsetzen des Durchsuchens der Datenstruktur (50) in dem Schritt c) (S300) ab dem für den zweiten spezifischen Knoten (2) festgelegten zweiten Rücksprungpunkt, aufweisend:

Wiederholtes Ausführen zumindest der Schritte c200 - c218 (S330) - (S339).

**9.** Verfahren nach Anspruch 8,
**dadurch gekennzeichnet,**
**dass** der dritte Passwortwahrscheinlichkeitswert (P(pnext3)) durch Multiplizieren des Wahrscheinlichkeitswertes des zweiten spezifischen Knotens (2) mit dem dritten Maximierungsergebnis (Max3) ermittelt wird.

**10.** Verfahren nach Anspruch 8 oder 9,
**dadurch gekennzeichnet,**
**dass** das Anwenden der dritten Backtracking-Entscheidungs-Funktion ferner ein Ermitteln eines oder mehrerer Entscheidungswahrscheinlichkeitswerte (O(P(pnext3))) in Abhängigkeit zumindest einer mathematischen Logarithmierungsfunktion aufweist, wobei jeder der einen oder mehreren ermittelten Entscheidungswahrscheinlichkeitswerte (O(P(pnext3))) zu je einem in einer Zeichenliste eines Knotens oberhalb des zweiten spezifischen Knotens (2) verbliebenen Zeichens (a) gehört, wobei jeder der einen oder mehreren ermittelten Entscheidungswahrscheinlichkeitswerte (O(P(pnext3))) mit Exponenten eines ermittelten Polynoms für den zur Zeichenliste gehörenden Knoten verglichen wird, um eine Anzahl (T1) von möglichen Passwörtern, welche in einem oder mehreren Knoten oberhalb des zweiten spezifischen Knotens (2) vorhanden sind, zu erhalten, wobei der dritte Variablenwert (VV3) durch Vergleichen der erhaltenen Anzahl (T1) von möglichen Passwörtern mit der Anzahl (R1) von noch für die Passwortliste zu generierenden Passwörtern verglichen wird, wobei die Anzahl (R1) von noch für die Passwortliste zu generierenden Passwörtern in Abhängigkeit des Wertes des Passwortzählers bestimmt wird.

**11.** Verfahren nach Anspruch 10,
**dadurch gekennzeichnet,**
**dass** die mathematische Logarithmierungsfunktion als Eingangsparameter zumindest den dritten Passwortwahrscheinlichkeitswert (P(pnext3)), den vom trainierten neuronalen Netz (30a) ermittelten Wahrscheinlichkeitswert für das in der Zeichenliste (L) des Knotens oberhalb des zweiten spezifischen Knotens (2) verbliebene Zeichen (a), den Wahrscheinlichkeitswert des Knotens und den vorbestimmten Wahrscheinlichkeitswert (p$) erhält, wobei der Knoten dem Wurzelknoten (ROOT) oder dem ersten spezifischen Knoten (1) entspricht, wobei die Zeichenliste der ersten Zeichenliste (L1) oder der zweiten Zeichenliste (L2) entspricht, wobei durch Anwenden eines Logarithmus durch die mathematische Logarithmierungsfunktion auf den Quotienten aus dem dritten Passwortwahrscheinlichkeitswert (P(pnext3)) und dem Produkt aus dem Wahrscheinlichkeitswert des Knotens, dem vom trainierten neuronalen Netz (30a) ermittelten Wahrscheinlichkeitswert für das in der Zeichenliste (L) des Knotens oberhalb des zweiten spezifischen Knotens (2) verbliebene Zeichen (a) und dem vorbestimmten Wahrscheinlichkeitswert (p$) der eine oder mehrere Entscheidungswahrscheinlichkeitswerte (O(P(pnext3))) ermittelt werden.

**12.** Verfahren nach einem der Ansprüche 1 - 11,
**dadurch gekennzeichnet,**
**dass** Schritt a) (S100) vor dem Empfangen ferner den Schritt aufweist:

Trainieren eines neuronalen Netzes (30) anhand einer vorhandenen Passwortliste (PL) über das vorbestimmte Alphabet (A) zum Erhalten des trainierten neuronalen Netzes (30a), wobei das trainierte neuronale Netz (30a) zum Erhalten eines Wahrscheinlichkeitswerts für jedes Zeichen des vorbestimmten Alphabets (A), welches auf die vorbestimmte Anfangszeichenfolge (z) oder eine der spezifischen Zeichenfolgen (bab, babb, babbb) folgt, ausgebildet ist.

**13.** Verfahren nach Anspruch 12,
**dadurch gekennzeichnet,**
**dass** die vorhandene Passwortliste (PL) Passwörter in einer bestimmten Sprache und/oder Passwörter in einem bestimmten Umfeld umfasst.

**14.** Computerprogrammprodukt, umfassend Befehle, die bei der Ausführung des Programms durch einen Computer diesen veranlassen, das Verfahren nach einem der Ansprüche 1 - 13 auszuführen.

**15.** Kommunikationssystem (100) zum Identifizieren von Sicherheitslücken in einer Entität (20), wobei das Kommunikationssystem (100) eine Prüf-Vorrichtung (40) und die Entität (20) aufweist, wobei die Prüf-Vorrichtung (40) aufweist:

eine Empfangs-Einheit (41) zum Empfangen eines trainierten neuronalen Netzes (30a),

eine Erhaltungs-Einheit (42) zum Erhalten einer oder mehrerer Wahrscheinlichkeitsverteilungen (W1, W2, W3) über ein vorbestimmtes Alphabet (A) in Abhängigkeit einer vorbestimmten Anfangszeichenfolge (z) und/oder in Abhängigkeit zumindest einer spezifischen Zeichenfolge (bab) aus mehreren spezifischen Zeichenfolgen (bab, babb, babbb) durch Anwenden des trainierten neuronalen Netzes (30a) auf die vorbestimmte Anfangszeichenfolge (z) oder eine der mehreren spezifischen Zeichenfolgen (bab, babb, babbb), wobei durch die eine oder mehreren erhaltenen Wahrscheinlichkeitsverteilungen (W1, W2, W3) jeweils jedem Zeichen aus dem vorbestimmten Alphabet (A) ein jeweiliger Wahrscheinlichkeitswert zugeordnet wird, und

eine Durchsuchungs-Einheit (43) zum Durchführen einer Tiefensuche in einer Datenstruktur (50), insbesondere in einer Baumstruktur, mittels Durchsuchen der Datenstruktur (50) in Abhängigkeit der einen oder mehreren erhaltenen Wahrscheinlichkeitsverteilungen (W1, W2, W3) und des vorbestimmten Alphabets (A) zum Generieren einer Passwortliste (G_PL) einer vorbestimmten Listengröße aufweisend eine Anzahl von Passwörtern, wobei die Prüf-Vorrichtung (40) ferner eine Prüfeinheit (44) aufweist, welche dazu eingerichtet ist, Sicherheitslücken in der Entität (20) mittels der Anzahl von Passwörtern der generierten Passwortliste (G_PL) zu identifizieren.

# FIG 1

```
┌──────────────┐
│              │── S100
└──────────────┘
       │
       ▼
┌──────────────┐
│              │── S200
└──────────────┘
       │
       ▼
┌──────────────┐
│              │── S300
└──────────────┘
       │
       ▼
┌──────────────┐
│              │── S400
└──────────────┘
```

# FIG 2

50

depth1

S319 (BT1)

z (W1) — ROOT (L1, Max1)

S340 (BT2)

S312

a

1a

4 (d)

baa

depth2

S360 (BT3)

bab (W2) — 1 (L2, Max2)

S332

a

2a

5 (e)

depth3

babb (W3)

2 (L3, Max3)

baba

6 (f) — S352

depth4

babbb — 3 (L4)

ROOT

1

S301, S310 – S319, VV1, P(pnext1)

S330, S331 – S340, VV2, P(pnext2)

G_PL

A

PW1 (ba)
PW2 (bab)
PW3 (babb)

$, a, b

S350, S351 – S360, VV3, P(pnext3) — 2

# FIG 3

Europäisches
Patentamt

European
Patent Office

Office européen
des brevets

## EUROPÄISCHER RECHERCHENBERICHT

Nummer der Anmeldung

EP 23 18 0974

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WILLIAM MELICHER ET AL: "Fast, Lean, and Accurate: Modeling Password Guessability Using Neural Networks", USENIX, USENIX, THE ADVANCED COMPUTING SYSTEMS ASSOCIATION , 28. September 2022 (2022-09-28), Seiten 186-202, XP061073457, Gefunden im Internet: URL:http://www.usenix.org/sites/default/files/sec16-full_proceedings_interior.pdf [gefunden am 2022-09-28] | 1,12-15 | INV. G06F21/46 ADD. G06N3/02 |
| A | * Fig. 1; Sections 3.1, 3.2, 4.1, 5.1; Abbildung 1 * | 2-11 | |
| | ----- | | |
| X | CHEN ZHENG ET AL: "A Reinforcement Learning-based Sequence Generation Algorithm for Password Guessing", GLOBECOM 2022 - 2022 IEEE GLOBAL COMMUNICATIONS CONFERENCE, IEEE, 4. Dezember 2022 (2022-12-04), Seiten 4891-4896, XP034268491, DOI: 10.1109/GLOBECOM48099.2022.10000814 [gefunden am 2023-01-11] | 1,12-15 | |
| A | * Sections II.A-II.C; Section IV * | 2-11 | RECHERCHIERTE SACHGEBIETE (IPC) G06F G06N |
| | ----- | | |
| X | PAL BIJEETA ET AL: "Beyond Credential Stuffing: Password Similarity Models Using Neural Networks", 2019 IEEE SYMPOSIUM ON SECURITY AND PRIVACY (SP), IEEE, 19. Mai 2019 (2019-05-19), Seiten 417-434, XP033617058, DOI: 10.1109/SP.2019.00056 [gefunden am 2019-09-12] | 1,12-15 | |
| A | * Sections II, V, in particular page 422 right column. Section IV, page 422 "Training pass2path". * | 2-11 | |
| | ----- | | |

Der vorliegende Recherchenbericht wurde für alle Patentansprüche erstellt

| Recherchenort | Abschlußdatum der Recherche | Prüfer |
|---|---|---|
| München | 21. November 2023 | Dingel, Janis |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MELICHER, UR, SEGRETI** ; **KOMANDURI, BAUER** ; **CHRISTIN, CRANOR**. Fast, Lean, and Accurate: Modeling Password Guessability Using Neural Networks. *25th USENIX Security Symposium*, 2016, www.usenix.org/system/files/conference/usenixsecur ity16/sec16_paper_melicher.pdf

- **HITAJ, GASTI** ; **ATENIESE, PEREZ-CRUZ**. *PassGAN: A Deep Learning Approach for Password Guessing*, 2017, https://arxiv.org/abs/1709.00440